# EUROPEAN PATENT SPECIFICATION

(11) **EP 4 281 804 B1**
(45) Date of publication and mention of the grant of the patent: **07.10.2026**
(21) Application number: 22743128.5
(22) Date of filing: 19.01.2022
(51) Int. Cl.: G01H 1/00, G01H 11/02, G01H 11/06, G01H 13/00, G01S 7/41, G01S 13/88

(54) **RADIO FREQUENCY CYBER PHYSICAL SENSING MODES FOR NON-INVASIVE FAULTS DIAGNOSIS OF ROTATING SHAFTS**
CYBER-PHYSIKALISCHE RADIOFREQUENZ-ERFASSUNGSMODI FÜR NICHTINVASIVE FEHLERDIAGNOSE VON DREHWELLEN
MODES DE DÉTECTION CYBER-PHYSIQUE PAR RADIOFRÉQUENCE POUR LE DIAGNOSTIC NON INVASIF DE DÉFAUTS D'ARBRES ROTATIFS

(30) Priority: 19.01.2021 US 202163139030 P
(43) Date of publication of application: 29.11.2023
(73) Proprietor: MASSACHUSETTS INSTITUTE OF TECHNOLOGY, Cambridge, MA 02139 (US); The Japan Steel Works, Ltd., Tokyo (JP)
(72) Inventor: ALSHEHRI, Ali Hamoud, Cambridge, Massachusetts 02142 (US); YEUNG, Yip Fun, Cambridge, Massachusetts 02141 (US); FUROKAWA, Mikio, Higashi-Hiroshima-Shi (JP); HIRANO, Takayuki, Wakashiba Kashiwa-shi (JP); YOUCEF-TOUMI, Kamal, Cambridge, Massachusetts 02138-3209 (US)
(74) Representative: Lind Edlund Kenamets Intellectual Property AB
(86) International application number: PCT/US2022/013020
(87) International publication number: WO 2022/159523

(56) References cited:
- DE-A1- 102011 076 690
- US-A- 4 413 519
- US-A1- 2016 304 192
- US-A1- 2017 052 060
- US-A1- 2017 052 060
- US-A1- 2021 008 931
- US-A1- 2021 008 931
- US-A1- 2021 102 853
- US-B1- 10 749 612
- US-B1- 10 892 558
- EBRAHIMI AMIR ET AL: "Metamaterial-Inspired Rotation Sensor With Wide Dynamic Range", IEEE SENSORS JOURNAL, IEEE, USA, vol. 14, no. 8, 1 August 2014 (2014-08-01), pages 2609 - 2614, XP011552445, ISSN: 1530-437X, [retrieved on 20140626], DOI: 10.1109/JSEN.2014.2313625
- RAO FANG ET AL: "Metamaterial-inspired rotation sensor based on complementary single split-ring resonator (CSSRR)", JOURNAL OF ELECTROMAGNETIC WAVES AND APPLICATIONS, vol. 32, no. 13, 6 May 2018 (2018-05-06), NL, pages 1664 - 1674, XP093217244, ISSN: 0920-5071, DOI: 10.1080/09205071.2018.1465480
- ALSHEHRI ALI ET AL: "Radio-Frequency-Based Resonating Sensor for Condition Monitoring on Rotary Equipment", 2021 IEEE SENSORS, IEEE, 31 October 2021 (2021-10-31), pages 1 - 4, XP034052251, DOI: 10.1109/SENSORS47087.2021.9639594
- EBRAHIMI ET AL.: "Metamaterial-Inspired Rotation Sensor With Wide Dynamic Range", IEEE SENSORS JOURNAL, vol. 14, 8 August 2014 (2014-08-08), XP011552445, Retrieved from the Internet <URL:http://www.eleceng.adelaide.edu.au/personal/dabbott/publications/ISJ_ebrahimi2014b.pdf> DOI: 10.1109/JSEN.2014.2313625

## Description

### CROSS REFERENCE TO RELATED APPLICATION

The present disclosure claims priority to and the benefit of U.S. Provisional Patent Application No. 63/139,030, entitled "Radio Frequency Cyber Physical Sensing Modes for Non-Invasive Faults Diagnosis of Rotating Shafts," filed January 19, 2021.

### FIELD

The present disclosure relates to detecting anomalies in machines with rotating shafts, and more relates to sensing modes, such as radio frequency (RF) radar and textured metamaterials, for diagnosing anomalies and the like in machines with rotating shafts in a non-invasive manner.

### BACKGROUND

The proliferation of machines with rotating shafts at high speed has brought huge interest for detecting associated anomalous behavior. Anomalous behavior involves excessive bending, vibration, eccentricity, torsion, and longitudinal strain. To date, any analysis related to the root causes of anomalous behavior and/or solutions to resolve the same is tailored to the specific system of interest. This is at least because each system is often unique in operation, process, and design. This is particularly the case for equipment that is expensive, and/or operates in a very complex setup, and/or produces critical products with special specifications.

In practice, rotating shafts are subjected to a variety of mechanical deformations. These deformations can be exacerbated by environmental conditions such harsh atmospheres, corrosive material, polymer contamination, and/or extreme temperatures. The reality is that rotating shafts can operate under a broad range of severe industrial conditions, making one or more of these environmental conditions plausible for any rotating shaft. To attempt to get out ahead of potential rotating shaft failures, it can be important to monitor the health of the shaft, such as by using onboard sensors.

Existing onboard sensors for rotary equipment are far from ideal. They can be attached directly to the shafts to probe their health conditions. This direct attachment, however, can cause the sensors to deform and/or otherwise be damaged in conjunction with operation of the equipment. Some non-limiting examples of the types of challenges onboard sensors face include: extensively added inertia; relatively complex mechanisms; and poor scalabilities.

US 10,749,612 B1 discloses a rotor assembly sensor system with interference isolation. The sensor system includes a rotor antenna, a radio frequency sensor, a stator antenna, and one or more frequency selective structures.

To the extent a strain gauge shaft sensor may be utilized in these contexts to measure mechanical deformations at a low cost with a simple installation process, such sensors may run into challenges. The sensor transfers strain from the shaft and amplifies it to increase sensitivity with no components to be in the stationary reference frame, allowing the entire device to rotate with the shaft. Some of the challenges the use of a strain gauge shaft sensor known in the art include: thermal drift, signal noise, mechanical attached load, weight, and/or balance of the attachment mechanism considering the sensor components of collars, bridges and/or associated bolts. Further, the circuit board and/or battery used in conjunction with known sensors may cause measurement errors, may negatively affect the machinery performance, and/or may promote stresses.

Accordingly, there is a need for a novel sensor capable of monitoring rotary shaft health. As provide below, in some ideal solutions, like the ones provided for herein, the sensor is contactless, lightweight, minimally complex, highly scalable to a more extensive geometrical range, and capable of monitoring many condition modes.

### SUMMARY

Electromagnetic-based sensors are potential solutions to the above-described shortcomings of sensor technology in rotating machinery. Radio frequency (RF), in particular, provides high sensitivity and versatility, and can allow for condition monitoring in a contactless fashion. An RF sensor operates by interrogating the following specific electromagnetic parameters: the real and imaginary parts of both the electrical permittivity (c) and the magnetic permeability (µ) using interfacing antennas. The working principle is highly generalizable because these parameters exist in all materials.

RF sensors have strong capabilities in diagnosing systems' faults in a contactless fashion. RF sensor operates by interrogating these materials' parameters using interfacing antennas. The sensors provided for herein provide robustness, safety, low cost, free space propagating signals, among other advantages. RF metamaterials and Doppler effect sensors are considered among top two important sensing types for certain applications. Flexible semi-contacted sensors are potential RF solutions because more defects can be identified through direct attachment to surfaces using very thin and artificially designed texturing layers.

As provided for herein, faults in rotating machines can be diagnosed or detected using two radio frequency (RF) sensing modes. RF sensing phenomenon can be used, for example, to detect the presence of undesirable behavior in rotating machines, including excessive bending, vibration, eccentricity, torsion, and longitudinal strain. RF-based sensors represent a non-invasive solution. The sensing modes are based on RF metamaterials and Doppler effect influence and radar cross section evaluation all coupled with a machine learning algorithm. These systems can be based on monitoring resonance shift, negative permeability, and/or return loss magnitudes, as described in greater detail below. Electromagnetic numerical simulations show a significant change in those magnitudes upon applied mechanical strains as compared to original reference unstrained cases. Metamaterial texturing design can also be controlled, for example, by controlling the cells scale and substrate materials.

In a first aspect, the present invention provides a radio frequency sensing apparatus for detecting an anomaly in a rotating machine as defined in independent claim 1.

In some embodiments, the apparatus can further include at least one metamaterial unit cell that can be configured to be arranged on the rotating machine. The metamaterial unit cell can also be configured to deform in response to the at least one type of anomaly being present in the rotating machine. The at least one signal can be transmitted from at least one signal source and can be reflected off of and transmitted through the at least one metamaterial unit cell such that the at least one radio frequency sensor receives the at least one signal.

The rotating machine includes a rotating shaft. Further, the at least one metamaterial unit cell can be configured to be adhered to an outer surface of the rotating shaft. The types of anomalies that can be detected include but are not limited to: tension of the rotating shaft, vibration of the rotating shaft, bending of the rotating shaft, torsion of the rotating shaft, and/or strain of the rotating shaft. Further, each of the comparisons of the resonance shift to the reference resonance shift, the magnetic permeability to the reference magnetic permeability, and/or the return loss magnitude to the reference return loss magnitude can correlate to at least one of the plurality of types of anomalies having occurred in the rotating shaft.

The processor can be configured to at least one of: (i) input the comparison of the at least one of resonance shift, magnetic permeability, and/or return loss magnitude to the corresponding reference resonance shift, reference magnetic permeability, and/or reference return loss magnitude for the rotating machine into a machine learning algorithm; or (ii) utilize the comparison of the at least one of resonance shift, magnetic permeability, and/or return loss magnitude to the corresponding reference resonance shift, reference magnetic permeability, and/or reference return loss magnitude for the rotating machine to train a neural network classifier. The machine learning algorithm in the first instance can be configured to utilize the comparison to learn and predict at least one association of at least one of the resonance shift, the magnetic permeability, or the return loss magnitude with at least one type of anomaly of the plurality of anomalies.

In some embodiments, the processor can be further configured to produce a mechanical deformation model to identify the at least one type of anomaly occurring in the rotating shaft. The mechanical deformation model can be based on, for example: (i) surface deformation of the rotating shaft caused by at least one of tension of the rotating shaft, vibration of the rotating shaft, bending of the rotating shaft, torsion of the rotating shaft, and/or strain of the rotating shaft; (ii) geometrical deformation of the at least one metamaterial unit cell; and/or (iii) a comparison of the surface deformation of the rotating shaft and the geometrical deformation of the at least one metamaterial unit cell.

In at least some embodiments, the at least one metamaterial unit cell can include a split-ring resonator that can include at least two rings comprised of metal that are bonded to a conductive substrate. The processor can be further configured to produce an electrical model to identify the at least one type of anomaly occurring in the rotating shaft. The electrical model can be based on total inductance between the at least two rings and total distributed capacitance between the at least two rings. A first ring of the at least two rings includes a first gap formed therein, and a second ring of the at least two rings is arranged outside of the first ring so as to encompass the first ring, the second ring including a second gap formed in it.

In some such embodiments, the first and second rings can each include a first strip, a second strip, a third strip, and a fourth strip, the four strips forming a first and second quadrilateral shape, respectively. The first strip of the first ring can include the first gap formed in it and can be located on a first side of the first quadrilateral shape of the first ring, opposite the second strip of the first ring that is located on a second side of the first quadrilateral shape of the first ring. Still further, the first strip of the second ring can include the second gap formed in it and can be located on a first side of the second quadrilateral shape of the second ring, opposite the second strip of the second ring that is located on a second side of the second quadrilateral shape of the second ring. The first ring and the second ring can be arranged relative to each other such that the second gap is located adjacent the second side of the first quadrilateral shape and the first gap can be located adjacent the second side of the second quadrilateral shape. In some such embodiments, the first and second strips of the first ring can be substantially parallel with the first and second strips of the second ring, and the at least one metamaterial unit cell can be arranged on the rotating shaft such that the first and second strips of the first ring and the first and second strips of the second ring are substantially parallel with a central axis of the rotating shaft around which the rotating shaft rotates.

In at least some embodiments the at least one metamaterial unit cell can include at least two metamaterial unit cells arranged in an array configuration on a conductive substrate. The two or more metamaterial unit cells can be arranged within apertures formed in the conductive substrate. The conductive substrate can include, for example, a dielectric material.

Further, for the apparatus: at least one metamaterial unit cell can be arranged on the rotating shaft, with the at least one metamaterial unit cell able to be configured to deform in response to the anomaly being present in the rotating shaft. The monostatic radar sensor can be configured to monitor the at least one signal being reflected off of the at least one metamaterial unit cell in response to the at least one signal being directed at the at least one metamaterial unit cell by at least one signal source.

In some such embodiments, the processor can be configured to evaluate a radar cross-section of the absorbing metamaterial textured coating, and the at least one signal source can be configured to illuminate the absorbing metamaterial textured coating via a radar beam. The radar bean can extend at an incident angle relative to the absorbing metamaterial textured coating and can reflect off of the absorbing metamaterial textured coating at a reflected angle, with the radar beam having a wavelength. Still further, at least one of the incident angle, the reflected angle, or the wavelength can be optimized to maximize the radar cross-section of the absorbing metamaterial textured coating.

In a second aspect, the present invention provides a method of detecting an anomaly in a rotating machine as defined in independent claim 10.

In some embodiments, the method can further include providing at least one metamaterial unit cell. The metamaterial unit cell can be configured to be arranged on the rotating machine and can be configured to deform in response to the at least one type of anomaly being present in the rotating machine. The at least one signal can be transmitted from at least one signal source and can be reflected off of and transmitted through the one metamaterial unit cell(s) such that the at least one radio frequency sensor receives the at least one signal.

The plurality of types of anomalies can include, for example, tension of the rotating shaft, vibration of the rotating shaft, bending of the rotating shaft, torsion of the rotating shaft, and/or strain of the rotating shaft. Each of the comparisons of the resonance shift to the reference resonance shift, the magnetic permeability to the reference magnetic permeability, and/or the return loss magnitude to the reference return loss magnitude can correlate to at least one of the plurality of types of anomalies having occurred in the rotating shaft.

The method can further include inputting, via the processor, at least one of the comparison of the resonance shift to the reference resonance shift, the comparison of the magnetic permeability to the reference magnetic permeability, or the comparison of the return loss magnitude to the reference return loss magnitude into a machine learning algorithm, and utilizing, via the machine learning algorithm, the comparisons to learn and predict at least one association of at least one of the resonance shift, the magnetic permeability, or the return loss magnitude with at least one type of anomaly of the plurality of anomalies.

In some embodiments, the method can further include training a neural network classifier by utilizing at least one of the comparison of the resonance shift to the reference resonance shift, the comparison of the magnetic permeability to the reference magnetic permeability, or the comparison of the return loss magnitude to the reference return loss magnitude.

The method can further include producing, via the processor, a mechanical deformation model to identify the at least one type of anomaly occurring in the rotating shaft. The mechanical deformation model can be based on: (i) surface deformation of the rotating shaft caused by at least one of tension of the rotating shaft, vibration of the rotating shaft, bending of the rotating shaft, torsion of the rotating shaft, or strain of the rotating shaft; (ii) geometrical deformation of the at least one metamaterial unit cell; and/or (iii) a comparison of the surface deformation of the rotating shaft and the geometrical deformation of the at least one metamaterial unit cell.

The at least one metamaterial unit cell can include a split ring resonator. The resonator can include at least two rings comprised of metal that are bonded to a conductive substrate. In at least some embodiments, the method can include producing, via the processor, an electrical model to identify the at least one type of anomaly occurring in the rotating shaft. The electrical model can be based on total inductance between the at least two rings and total distributed capacitance between the at least two rings. A first ring of the at least two rings can include a first gap formed in it, and a second ring of the at least two rings can be arranged outside of the first ring so as to encompass the first ring. The second ring can also include a second gap formed in it.

### BRIEF DESCRIPTION OF THE DRAWINGS

The following Detailed Description references the accompanying drawings which form a part this application, and which show, by way of illustration, specific example implementations, in which:
FIG. 1A is an isometric view of a generalized metamaterial unit cell of a radio frequency sensing apparatus according to the present disclosure with N = 2 rings, and showing that the radio frequency sensing apparatus includes an RF sensor, a signal source, and a processor operably connected to the RF sensor;
FIG. 1B is a top view of the metamaterial unit cell of FIG. 1A showing the four sides being denoted as j, j ∈ 1, 2, 3, 4;
FIG. 2A is a schematic view of a rotating shaft of the radio frequency sensing apparatus of FIG. 1A, showing the placement of the metamaterial unit cell;
FIG. 2B is a schematic view of a rotating shaft of the radio frequency sensing apparatus of FIG. 1A, showing generalized forces and corresponding generalized displacements due to tension;
FIG. 2C is a schematic view of a rotating shaft of the radio frequency sensing apparatus of FIG. 1A, showing generalized forces and corresponding generalized displacements due to shear;
FIG. 2D is a schematic view of a rotating shaft of the radio frequency sensing apparatus of FIG. 1A, showing generalized forces and corresponding generalized displacements due to bending;
FIG. 2E is a schematic view of a rotating shaft of the radio frequency sensing apparatus of FIG. 1A, showing generalized forces and corresponding generalized displacements due to torsion;
FIGS. 3A-3C are top views of exemplary array arrangements of the metamaterial unit cells of FIG. 1A;
FIG. 4A is a schematic view of a ring of the metamaterial unit cell of FIG. 1A showing variable annotations of the ring under deformation, indicating that the dashed lines show the original ring and solid lines showing the deformed ring;
FIG. 4B is an isometric view of the metamaterial unit cell of FIG. 1A, showing the unit cell in the original form and the unit cell in the deformed form;
FIG. 5 is a schematic view of an RF equivalent circuit of a monostatic radar sensor illuminated rotating shaft;
FIG. 6 is a graph of a Matlab simulation showing the objective of absorbing material impedance design, the objective being to obtain a material for which the reflection coefficient is as small as possible over the design frequency;
FIG. 7A is a perspective view of an exemplary rotating machine with which the radio frequency sensing apparatus of FIG. 1 may be utilized;
FIG. 7B is schematic view of the exemplary rotating machine of FIG. 7A with which the radio frequency sensing apparatus of FIG. 1 may be utilized;
FIG. 8 is an isometric view of a mechanical bending relationship with RCS of a rotating shaft;
FIG. 9 is a graph of simulation results showing mechanical stress effect on resonator texturing and permeability as a sensing mechanism;
FIG. 10 is a graph of return loss as a sensing mechanism correlated to bending degrees;
FIG. 11 is a graph of a parallelogram-shaped metamaterial compared to a flat case, the unit cell performance being affected in terms of dB value and frequency shift;
FIG. 12 is a graph of the metamaterial unit cell of FIG. 1A showing bending, stretching, and twisting of the unit cell and corresponding graphical representations of these deformations;
FIG. 13A is a graph of radar cross-section (RCS) electromagnetic (EM) radiation patterns for a perfect metallic conductor on a rotating shaft;
FIG. 13B is a graph of RCS EM radiation patterns for a magnetic film absorber on a rotating shaft;
FIG. 14 is a graph of vibration sensitivity as a function of frequency;
FIG. 15 is a flow chart of inputs and outputs of mechanical and electrical modelling of a deformed unit cell;
FIG. 16 is a plurality of graphs illustrating return loss analysis across fundamental modes of deformation;
FIG. 17 is a graph of relative permeability, showing that relative permeability varies as a unit cell undergoes a single mode of deformation with various amplitude;
FIG. 18 is a graph of return loss, showing return loss as the unit cell undergoes different amplitudes of bending deformation;
FIG. 19 is a graph of simulation results of mechanical stress effect on resonator texturing where permeability is used as the sensing mechanism, the x-axis represents the frequency range, and the y-axis represents the real permeability values;
FIG. 20A is a top view and corresponding graph of the metamaterial unit cell of FIG. 1, showing the unit cell at 90 degrees, and where the x-axis represents the frequency range and the y-axis represents the return loss values;
FIG. 20B is a top view and corresponding graph of the metamaterial unit cell of FIG. 1, showing the unit cell at 89 degrees, and where the x-axis represents the frequency range and the y-axis represents the return loss values;
FIG. 20C is a top view and corresponding graph of the metamaterial unit cell of FIG. 1, showing the unit cell at 85 degrees, and where the x-axis represents the frequency range and the y-axis represents the return loss values;
FIG. 20D is a top view and corresponding graph of the metamaterial unit cell of FIG. 1, showing the unit cell having a random shape, and where the x-axis represents the frequency range and the y-axis represents the return loss values;
FIG. 21A is two graphs of return loss response in a reference state of the metamaterial unit cell of FIG. 1;
FIG. 21B is four graphs of return loss response in various twisting states of the metamaterial unit cell of FIG. 1;
FIG. 22A is a graph of return loss response of the metamaterial unit cell of FIG. 1 for an *εᵣ* value of 1;
FIG. 22B is a graph of return loss response of the metamaterial unit cell of FIG. 1 for an *εᵣ* value of 4;
FIG. 22C is a graph of return loss response of the metamaterial unit cell of FIG. 1 for an *εᵣ* value of 3.5;
FIG. 22D is a graph of return loss response of the metamaterial unit cell of FIG. 1 for an *εᵣ* value of 9;
FIG. 23A is a graph of return loss response of the metamaterial unit cell of FIG. 1 for an original scale value of 1;
FIG. 23B is a graph of return loss response of the metamaterial unit cell of FIG. 1 for a scaling factor of 0.5;
FIG. 24 is an isometric view of twisted structures is another scenario according to the present disclosure;
FIG. 25 is a schematic diagram of steps for fabricating a metamaterial according to the present disclosure;
FIG. 26A is a perspective view of an inkjet printer that can directly deposit functional materials to form a variety of patterns onto a substrate;
FIG. 26B is a top view of one pattern that can be deposited by the inkjet printer of FIG. 26A;
FIG. 27 is a top view of printing results on polyethylene terephthalate (PET) using Novacentrix JS-A211 ink;
FIG. 28 is a top perspective view of printing results of metamaterial (MTM) structures on polydimethylsiloxane (PDMS) using Sigma Aldrich ink;
FIG. 29 is a schematic view of instrumentation of a radio frequency sensing apparatus according to the present disclosure, showing an RF generator, an RF analyzer processor, and an MTM sensor;
FIG. 30 is a perspective view of an RF analyzer processor of the radio frequency sensing apparatus of FIG. 29; and
FIG. 31 is a schematic view of machine learning and data analytics that may be utilized with the radio frequency sensing apparatuses described herein.

### DETAILED DESCRIPTION

Certain exemplary embodiments will now be described to provide an overall understanding of the principles of the structure, function, manufacture, and use of the devices and methods disclosed herein. One or more examples of these embodiments are illustrated in the accompanying drawings. Those skilled in the art will understand that the devices and methods specifically described herein and illustrated in the accompanying drawings are non-limiting exemplary embodiments and that the scope of the present invention is defined solely by the claims. The features illustrated or described in connection with one exemplary embodiment may be combined with the features of other embodiments. Such modifications and variations are intended to be included within the scope of the present disclosure. Further, the present disclosure provides some illustrations and descriptions that include prototypes, bench models, and/or schematic illustrations of set-ups. A person skilled in the art will recognize how to rely upon the present disclosure to integrate the techniques, systems, devices, and methods provided for herein into a product and/or a system provided to customers, such customers including but not limited to individuals in the public or a company that will utilize the same within manufacturing facilities or the like. To the extent features are described as being disposed on top of, below, next to, etc. such descriptions are typically provided for convenience of description, and a person skilled in the art will recognize that, unless stated or understood otherwise, other locations and positions are possible without departing from the scope of the present invention as defined by the claims.

Unless otherwise defined, all technical terms used herein have the same meaning as commonly understood by one of ordinary skill in the art to which this disclosure belongs. Additionally, like-numbered components across embodiments generally have similar features unless otherwise stated or a person skilled in the art would appreciate differences based on the present disclosure and his/her knowledge. Accordingly, aspects and features of every embodiment may not be described with respect to each embodiment, but those aspects and features are applicable to the various embodiments unless statements or understandings are to the contrary.

According to the present disclosure, an elastic RF-metamaterial (RF-MTM) sensor 10, also referred to as a radio frequency sensing apparatus, for condition monitoring of rotating shafts is described. The radio frequency sensing apparatus 10 results in significant return loss and permeability change when it undergoes various modes of deformations with numerical modeling and simulation. The distinctive changes in signals possess huge potentials for condition monitoring and anomaly detection with both model-based and data-driven methods.

Metamaterial (MTM) sensing is utilized in the radio frequency sensing system 10. MTMs are artificially made electromagnetic materials that include periodically arranged metallic elements having sizes that are less than the wavelength of the incident electromagnetic (EM) wave. These materials exhibit exotic electromagnetic properties that are not readily available in nature, such as reverse Doppler effect, Vavilov-Cerenkov effect, negative refraction, diffraction-limit breaking imaging, and cloaking.

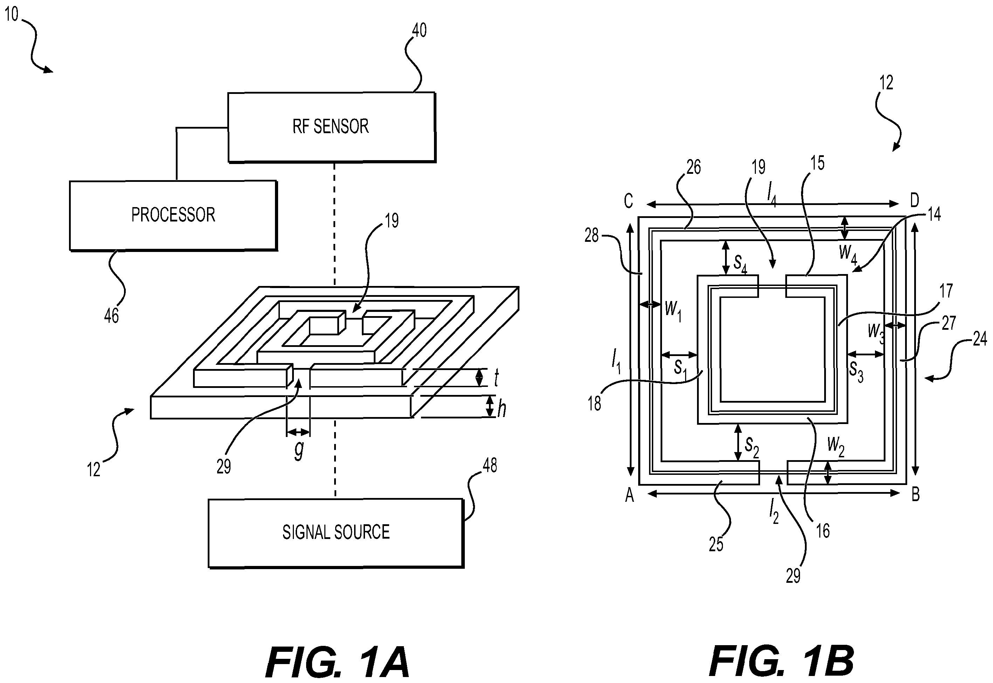

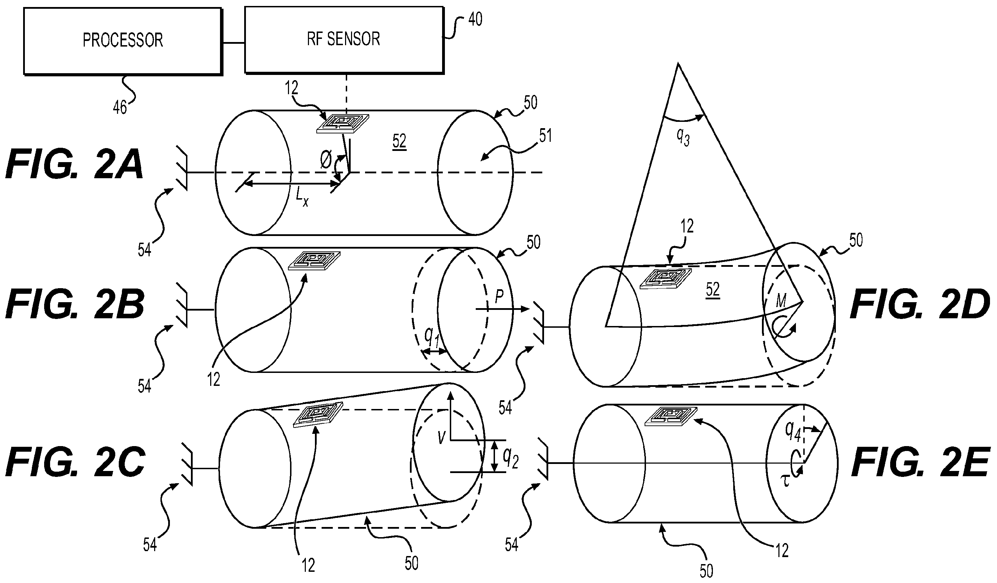

In at least one embodiment, the radio frequency sensing apparatus 10 includes a radio frequency sensor 40 (also referred to as an RF signal analyzer), a processor 46, a signal source 48, and an MTM unit cell 12, as shown in FIGS. 1A-2E. The sensing apparatus or system 10 may further include a rotating shaft 50. Alternatively, the MTM unit cell 12 can be mounted to a rotating shaft 50 that is separate and apart from the apparatus 10. In the embodiments of FIGS. 2A-2E, the radio frequency sensing apparatus 10 includes a deformed MTM unit cell 12. The rotating shaft 50 experiences generalized force inputs, which mechanically deform the geometry of the MTM unit cell 12 that is directly bonded to the surface of the shaft 50, which further deviates its electrical properties. The RF signal analyzer 40 can capture the RF signals that transmit through and reflect from the unit cell 12. Depending on the extent of change in the electrical properties, the captured RF signals can differ drastically.

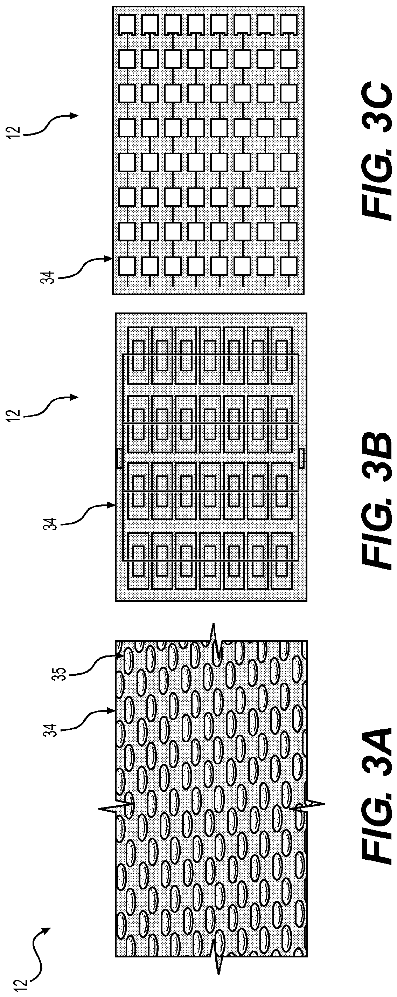

In the illustrated embodiment, the MTM unit cell 12 is a split-ring resonator (SRR) unit cell, as shown in FIG. 1A. The MTM unit cell 12 can include two MTM rings (*i.e*., *N* = 2), a first ring 14 and a second ring 24, that are bonded to a conductive substrate 34 (*see* FIGS. 3A-3C). In other embodiments, the MTM unit cell 12 may include greater than two MTM rings. In the illustrated embodiment each ring 14, 24 includes four strips, with one strip of the four strips being substantially perpendicularly disposed with respect to two strips and substantially parallel to a third strip to form a rectangle or square shape. As shown, the first ring 14 includes a first strip 15, a second strip 16 opposite the first strip 15, a third strip 17 extending between terminal ends of the first and second strips 15, 16, and a fourth strip 18 opposite the third strip 17 and extending between opposite terminal ends of the first and second strips 15, 16. In the illustrated embodiment, the first and second strips 15, 16 are substantially parallel and the third and fourth strips 17, 18 are substantially parallel. The strips 15, 16, 17, 18 form approximate right angles at their joining points as shown in FIGS. 1A and 1B. In other embodiments, the strips 15, 16, 17, 18 may be arranged so as to not be substantially parallel, substantially perpendicular, and/or to be in other shapes and configurations.

Similar to the first ring 14, the second ring 24 can include a first strip 25, a second strip 26 opposite the first strip 25, a third strip 27 extending between terminal ends of the first and second strips 25, 26, and a fourth strip 28 opposite the third strip 27 and extending between opposite terminal ends of the first and second strips 25, 26. In the illustrated embodiment, the first and second strips 25, 26 are substantially parallel and the third and fourth strips 27, 28 are substantially parallel. The strips 25, 26, 27, 28 form approximate right angles at their joining points as shown in FIGS. 1A and 1B, thus forming a rectangle or square shape. In other embodiments, the strips 25, 26, 27, 28 may be arranged so as to not be parallel and/or in other shapes and configurations. In the illustrated embodiment, the second ring 24 is arranged outside of the first ring 14 so as to encompass the first ring 14, as shown in FIGS. 1A and 1B.

The first ring 14 includes a first gap 19 formed in the first ring 14 and the second ring 24 includes a second gap 29 formed in the second ring 24, as shown in FIGS. 1A and 1B. In particular, at least in the illustrated embodiment, the first gap 19 is formed in the first strip 15 of the first ring 14 and the second gap 29 is formed in the first strip 25 of the second ring 24. Further, the first ring 14 and the second ring 24 can be arranged relative to each other such that the second gap 29 is located adjacent the second strip 16 of the first ring 14 and the first gap 19 is located adjacent the second strip 26 of the second ring 24.

The initial thickness t of the rings 14, 24, the width *w* of the strips 15, 16, 17, 18, 25, 26, 27, 28, and a length g of the gaps 19, 29 are shown in FIGS. 1A and 1B. The corners of the rings 14, 24 are denoted as A, B, C, and D according to FIG. 1B. The width and thickness of the strips and the separations between the inner and outer strips are *wⱼ*, *tⱼ*, and *sⱼ*, respectively (where j is equal to 1, 2, 3, or 4, which corresponds to the first, second, third, and fourth strips of the ring). In the undeformed condition, it is assumed that: *lⱼ = l, wⱼ = w, tⱼ = t, sⱼ = s, ∀j.* The thickness of the substrate is *h*. The parameter *ρ* is the MTM rings ratio and is given by: 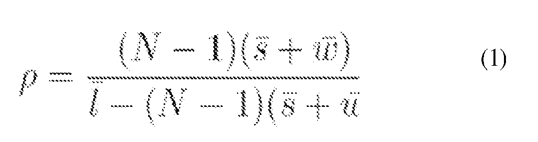 where the overhead bar denotes the average over all four sides. As shown in FIG. 2A, the unit cell 12 can be attached to an outer surface 52 of the shaft 50 at a distance, *Lx*, away from a motor output 54. The length of the shaft 50 and radius are denoted as *Ls* and *Rs,* respectively. The unit cell 12 can be installed such that the first strips 15, 25 and the second strips 16, 26 of the first ring 14 and the second ring 24 are substantially parallel with a central axis 51 of the rotating shaft 50 around which the rotating shaft 50 rotates.

In the illustrated embodiment, the unit cell 12 is configured to be adhered or otherwise attached to the outer surface 52 of the shaft 50, as shown in FIGS. 2A-2E. In some embodiments, the unit cell 12 is not directly adhered to the shaft 50. In such an embodiment, an intermediary surface is disposed on the shaft 50, and the unit cell 12 is arranged on the intermediary surface. So long as the unit cell 12 is positioned to receive and send the signal, the unit cell 12 can function properly. In other embodiments, the unit cell 12 can be adhered directly to the outer surface 52 of the shaft 50.

The mechanical deformation model includes three parts: surface deformation when the shaft 50 is under generalized force inputs; local geometrical change of the MTM rings 14, 24; and the relationship between local deformation of the unit cell 12 and the deformation of the shaft surface 52. Several assumptions are specified to derive the mechanical deformation model. The dimensions of the unit cell 12 are small compared to the shaft 50 such that *Lₓ* approximately describes all corners on the cell 12, and the unit cell 12 can be approximated as two-dimensional. Additionally, the deformation of the cross-sections of the strips 15, 16, 17, 18, 25, 26, 27, 28 is substantially uniform, *i.e.,* the width change on the stress-free top surface and the bonded bottom surface of one of the strips are assumed as equal. The gap and intersecting region of the two sides have negligible effects on the deformation of the strips. The Poisson's ratio, *v,* is homogeneous in all directions.

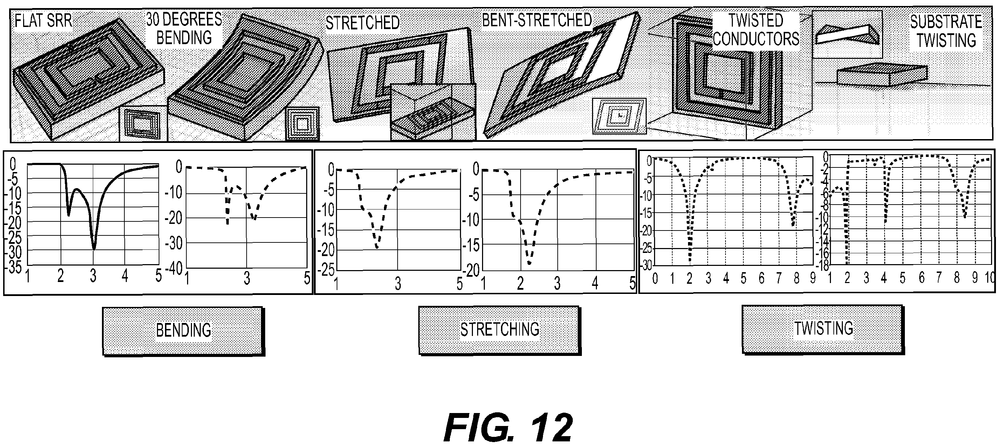

In the illustrated embodiment, the cross-sections of the strips 15, 16, 17, 18 of the first ring 14 and the strips 25, 26, 27, 28 of the second ring 24 are identical. The surface deformation of the shaft 50 under generalized force input can be modeled. Deformed shafts 50 are depicted in FIGS. 2A-2E when they are under four modes of generalized forces: axial force *P,* shear force V, bending moment *M,* and torque *τ*, labeled as Mode *i; i 2 1; 2; 3*; and 4, respectively. Examples of bending, stretching, and twisting of the unit cell 12 are shown in FIG. 12, which will be described in greater detail below. With Castigliano's second theorem, the relative generalized displacements, *δqᵢ* within a small length *δLₓ* along the shaft 50 can be expressed as:

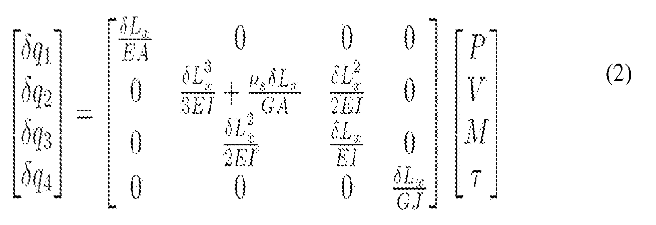

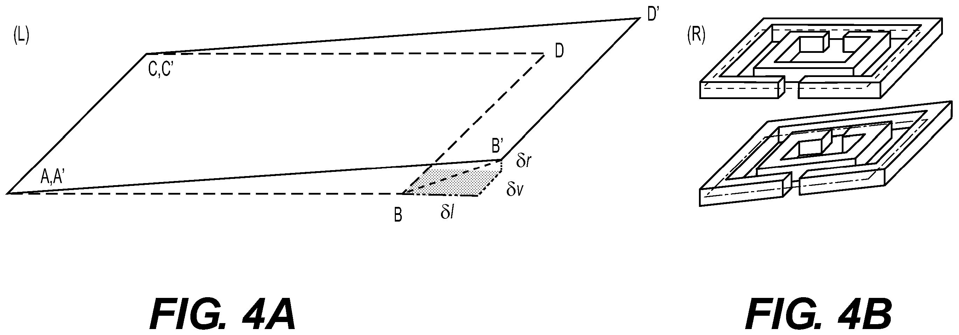

Next, local deformation within a unit cell 12 when its substrate is deformed can be derived. When the underlying shaft 50 surface deforms, the MTM unit cell 12 deforms into A'B'C'D', as depicted in FIG. 4A. The superscript "0" denotes the deformed parameters. The displacement from B to B' along the AB, BD and plane ABCD directions are denoted as *δlₗ*, *δvₗ*, and *δrₗ*, respectively. Considering Poisson's ratio, the unit cell 12 deformations can be derived as:

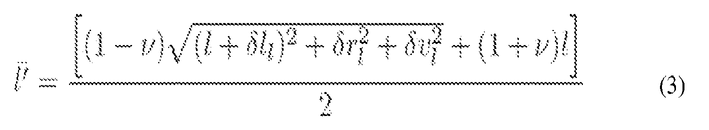

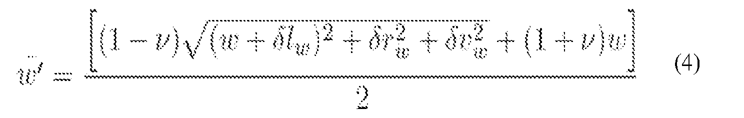

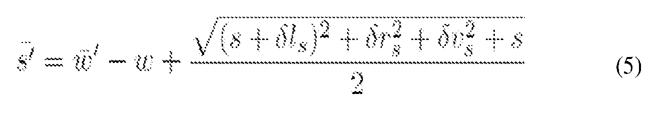

The relationship between the surface deformation of a shaft 50 and the local deformation of a unit cell 12 can also be derived. As demonstrated in FIG. 2A, the angular displacement between the bending axis and the unit cell 12 axis can be denoted as *φ*. Thus, 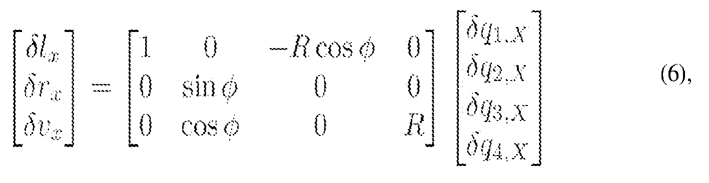 with *X* ε {*l, w, s*} to denote the specific geometrical parameter.

A person skilled in the art will understand how to derive the electrical model of MTM unit cells in view of the present disclosures. The total inductance, L, and the total distributed capacitance, C, between the two rings 14, 24 of the SSR unit cell can be derived with: 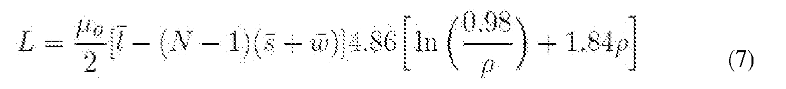 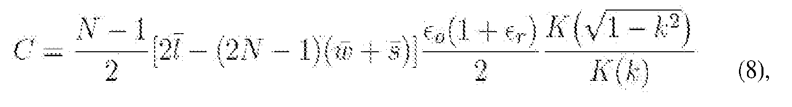 where *K*(*k*) is known as the complete elliptical integral of the first kind, 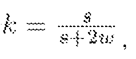 *εᵣ* is the relative permittivity of the substrate, and *cₒ* is the permittivity of free space constant. The resonance frequency of the return loss can be modeled as: 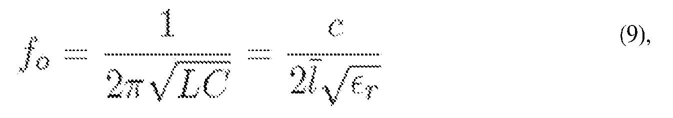 where c is the speed of light constant. By definition, the permeability *µ* is inductance over length: 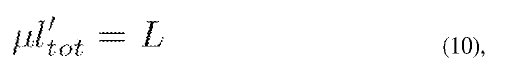 which can be further combined with (2),(3),(4),(5) to directly relate the reflected RF signals with the generalized force inputs P, *V, M, τ*. The RF signals are indicative of at least one of resonance shift, magnetic permeability, or return loss magnitude.

In the illustrated embodiment, the processor 46 is configured to compare the at least one of resonance shift, magnetic permeability, or return loss magnitude of the RF signal to a corresponding reference resonance shift, reference magnetic permeability, or reference return loss magnitude for the shaft 50. The processor 46 is further configured to determine whether an anomaly has occurred in the rotating shaft 50 based on these comparisons. Moreover, the processor 46 is configured to identify at least one type of anomaly of a plurality of types of anomalies that has occurred in the rotating shaft 50 based on these comparisons. The plurality of types of anomalies may include one or more of tension of the rotating shaft 50, vibration of the rotating shaft 50, bending of the rotating shaft 50, torsion of the rotating shaft 50, or strain of the rotating shaft 50. Each of the comparisons of the resonance shift to the reference resonance shift, the magnetic permeability to the reference magnetic permeability, and/or the return loss magnitude to the reference return loss magnitude correlates to at least one of the plurality of types of anomalies having occurred in the rotating shaft 50.

In some embodiments, the processor 46 may be further configured to input the comparison of the at least one of resonance shift, magnetic permeability, or return loss magnitude to the corresponding reference resonance shift, reference magnetic permeability, or reference return loss magnitude for the rotating machine into a machine learning algorithm. Further, the machine learning algorithm can be configured to utilize the comparison to learn and predict at least one association of at least one of the resonance shift, the magnetic permeability, or the return loss magnitude with at least one type of anomaly of the plurality of anomalies. The processor 46 can also be configured to utilize the comparison of the at least one of resonance shift, magnetic permeability, or return loss magnitude to the corresponding reference resonance shift, reference magnetic permeability, or reference return loss magnitude for the rotating machine to train a neural network classifier. A person skilled in the art, in view of the present disclosures, will understand how the machine leaning algorithm is able to learn and predict based on the information gathered and otherwise determined in view of the unit cell 12, as well as how a neural network or neural network classifier can be trained, and thus a detailed explanation as to how machine learning algorithms more generally operate and how neural networks and neural network classifiers are more generally trained is unnecessary. The relevant aspects needed to implement the same are derivable from the present disclosures by a skilled person in the art.

By way of example, the neural network algorithms can be general function approximators. In the setting of at least one embodiment, the neural network can be used to either map surface deformation to the signals or vice versa. This is beneficial in that there is provided a methodology and mathematical models such that correspondences between signals and surface deformation may be generated. These data can be used to train neural networks such that instead of an exact analytical math model, a grey/black box model that might generalize to a larger context can be provided. A person skilled in the art will appreciate that the present disclosures enable other ways to leverage the data generated by implementing the present disclosures to gain insight and/or solve practical problems.

In some embodiments, the sensing system 10 may include at least two unit cells 12 arranged in an array configuration on the conductive substrate 34, or equivalents of the same known to a person skilled in the art. FIG. 3 illustrates exemplary arrangements of a plurality of unit cells 12 arranged on a substrate 34. The conductive substrate 34 can be made from a variety of materials, including but not limited to a dielectric material. In some embodiments, the at least two metamaterial unit cells 12 are arranged within apertures 35 formed in the conductive substrate 34.

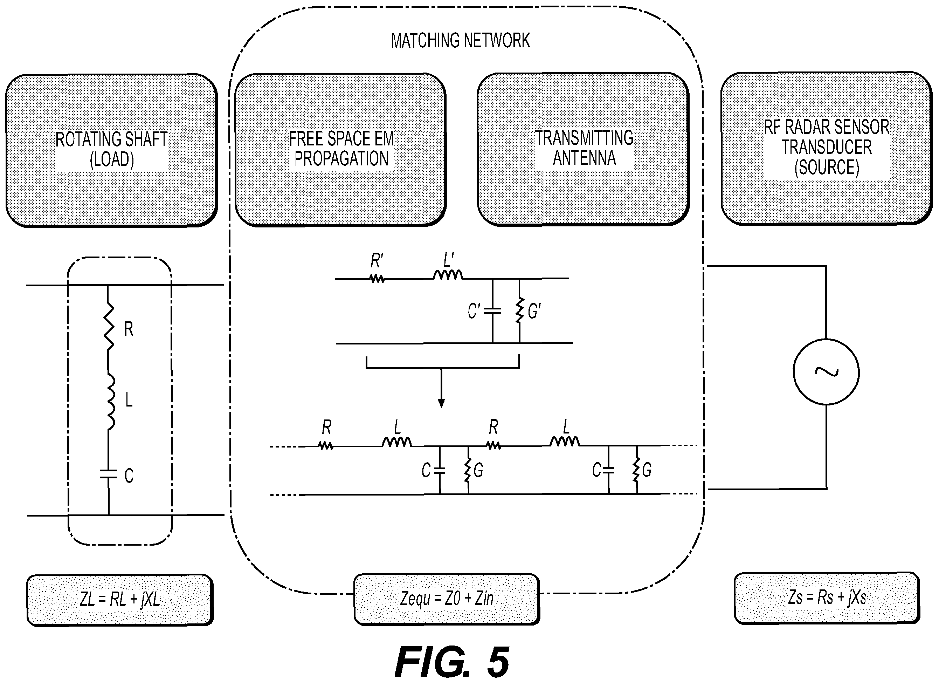

Additional details regarding the unit cells 12 and the manner in which the radio frequency sensing apparatus 10 detects anomalies will be described in greater detail. The whole system can be important when considering RF sensing architecture, as shown in FIG. 5. It starts from the design of a monostatic illumination source with equivalent source impedance (Z_{S}) to a destination component as a function of target material (Z_{L}). Its design can influence the transmission and reflection coefficients. Equivalent distributed electrical elements per unit length (*R', L', C'* and *G'*) of a transmission line between a source and a load with the corresponding equivalent impedance (Z_{equ}) and zoom in elements can expand along the line. This equivalent system can be modelled as a Two-Port network analysis in terms of the scattering parameters. In any RF network, some of the incident wave can be reflected, while some can be transmitted. For loss-less ideal networks, the transmitted wave can be exactly as the incident one. However, this is not the case in realty where many path losses can affect reflection coefficients. These losses and reflection coefficients can be mainly governed by designs of matching networks. This topic can be further understood by examining scattering parameters.

In the design and characterization of RF circuits, it can be helpful to identify a range of operating frequencies. Frequencies ranging from audio to some hundreds of megahertz can be characterized on the basis of current, voltage, and/or impedance. Up to this low range of frequencies, the circuits can show a behavior that is similar to DC (not frequency dependent signal). However, above a few hundred megahertz, measuring these quantities is not practical or particularly meaningful at least because the circuits are distributed and so are the voltages and currents. Accordingly, other useful quantities, such as the voltage reflection coefficient and microwave power measurements, can be used. This kind of characterization can be referred to as the "scattering parameters" or "S-parameters." This set of parameters can embody the effect of the reflections and transmissions of the power for any network. This characterization can be highly desirable, useful, and/or convenient to use in most types of networks whether there are active, passive, and/or multi-ports. Additionally, a person skilled in the art, in view of these disclosures, will appreciate it can be easy to convert between these parameters and other network parameters.

As previously mentioned, the S-parameters can be useful for approaches above about one-hundred MHz, but they can be used even down to a few hundred kHz. Actually, these measurements are adopted because they are defined in terms of travelling wave voltages, which can be convenient to characterize interconnects and/or transmission lines. These parameters can naturally relate the signal entering at one port of a line to the other signal at the other end of it (*i.e.,* a two port network model).

There are other factors that can affect the RF propagation characteristics, including but not limited to properties of the substrate and conductors. Reducing the dielectric constant of substrate can increase the characteristic impedance of the conductor and can decreases the delay. For example, air is the fastest dielectric medium ever known, where its low dielectric constant (=1) leads to small propagation delay (*i.e.,* fast propagation). The ratio of the electric field to the magnetic field in free space is approximately 377 Ω (120*π* Ω). Perfect conductors, such as copper or steel, have very low resistivity, which can impose significant impact on the wave's propagation.

In the present rotating shaft case, which is made of steel, the reflection coefficient can be different from insulating counterparts. This can lead to deliberately modifying the target surface load to enable better RF sensing. The goal can be to influence the reflected RF signal and correlate any shaft deformations. This may include relying upon surface coating and/or texturing, as well as other techniques known to those skilled in the art for identifying more stress deformations such as torsion, bending, and cracks.

The present disclosure contemplates creating a damping effect on the RF incident signal by texturing the cylinder shaft with at least one absorbing metamaterial textured coating, which will be described in detail below, and/or attaching an adhesive polymer thin strip with some inductive and/or capacitive reactance components, such as the unit cell 12 described above. This disruptive system on the surface 52 of the shaft 50 can create a damping effect of the EM waves at specific locations in the shaft 50 that may convey useful information on the defects status and/or type. In the invention, , a coating of absorbing metamaterials, namely an absorbing metamaterial textured coating, is used. A polymer strip, such as the unit cell 12, can be put on the load side and made of inductive polymer resonance metamaterial that can absorb the EM wave energy to at least minimize the intensity of the RF reflected signal. The loss mechanisms are accounted for in the permittivity (ε) and permeability (µ) of the selected material.

Design of a metamaterial coating on the shaft can also be dependent on many factors, such as frequency dependence, polarization effect, shape configuration, and/or para-magnetism. For the frequency dependence factor, the composition and morphology of the polymer strip or unit cell 12 material can be carefully tailored to absorb radar waves over a specific frequency band. Polarization Effect depends on the use of ferromagnetic particles embedded in a polymer matrix having a high dielectric constant. Ferrofluids for instance, are superparamagnetic and strongly polarized by electromagnetic radiation. When the fluid is subjected to a sufficiently strong electromagnetic field, the polarization can cause corrugations to form on the surface. The electromagnetic energy used to form these corrugations can weaken or eliminate the energy of the reflected radar signal.

Shape configuration can be an important factor. Generally, the thicker the strip, the better the absorption. Also, partial texturing can have a different impact as compared to texturing a whole surface. Partial is provided in the present disclosures to aid in the detection of various parameters. For example, for the detection of vibration, the shaft surface can be metallic to get higher sensitive data. There is not necessarily a need for coating or texturing for this type of mechanical effect, though that does not necessarily preclude the use of a coating or texturing if desired. Torsion and bending can be detectable from RF signal interpretation, as well as, at least in some instances, use of a machine learning algorithm. Still further, torsion and bending can be determined through localization and/or position information. Para-magnetism refers to materials like aluminum or platinum, which can become magnetized in a magnetic field, but their magnetism may disappear when the field is removed. Ferromagnetism refers to materials, such as iron and nickel, that can retain their magnetic properties when the magnetic field is removed.

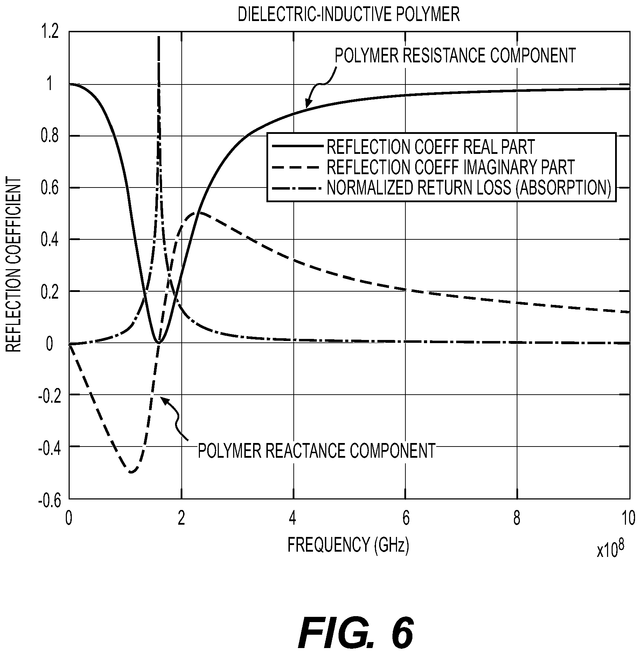

FIG. 6 shows the reflection coefficient response as a function of frequency and material hosting matrix. Once the shaft surface 52 is modified, an RLC (resistor-inductor-capacitor) resonance at the load can be created. This response can be modeled considering a load matching network to free space impedance. At around 1.8 GHz, the reflection from the load polymer strip will be maximum, as return loss (RL) indicates.

This is one way of creating a dielectric-inductive polymer strip or unit cell 12. Table 1 summarizes some techniques that can be applied on the shaft surface 52 to affect the incident wave without considering mechanical deformations correlation at this stage. One way to look into this is by considering a radar sensor model and radar cross section (RCS) evaluation parameter, as opposed to incident wave on a target.

**Table 1**

| Technique | Pros | Cons |
|---|---|---|
| Shaping and direct surface texturing | Better at high optical frequencies | Design and fabrication difficulties with high cost |
| Absorbing metamaterial textured coating | Remarkable influence in the target cross section | Maintenance, added weight and excitation challenges |

Shaping technique can be helpful, for example, by designing surface edges to diffract incident waves, while absorbing materials can reduce the energy reflected back to the RF sensor, for example, by means of absorption.

Absorbing material coating can be based on designing an appropriate impedance to the incident signal to pose a good matching and absorbing network and/or introducing an attenuation characteristic. This can enable a remarkable reduction in target cross section, but on the cost of added weight and requirement of regular maintenance. Passive or active cancellation can be achieved by introducing a secondary scatterer to cancel the reflection of the primary target. A person skilled in the art, in view of the present disclosures, will understand how to introduce such a scatterer or scattering device. Active cancellation involves the process of modifying and retransmitting the received radar signal. It can be implemented for military applications or complex threat, among other uses.

There are different options in suppressing RF signals at the load, including but not limited to design of pure dielectric, pure magnetic, and/or a mixture of the two. Coating the shaft surface with a magnetic absorber can help by virtue or providing thickness reduction of the coated polymer and quick suppression of the RF incident signal.

Described further below are three RF sensing perspectives or modes that were investigated from the point of views of: a) RF metamaterial coating on the rotating load; b) shaft material influence and RCS patterns at the source; and c) Doppler effect from a reflected RF signal.

A unit cell split ring resonator (SRR) 12 metamaterial can be designed using Computer Simulation Technology (CST) software. The objective is to evaluate its electrical response to mechanical stresses in a general form to understand how it will likely perform in detecting mechanical anomalies in practice. The electrical responses that can be taken as sensing mechanisms and studied include return loss, permeability values, and/or shift.

Metamaterials are periodic resonant artificial structures composed of sub-wavelength unit cells. They have shown exotic electromagnetic phenomena, which cannot be explained with conventional optics and cannot be obtained in nature, such as negative refractive index. By modifying the design of metamaterial components (such as conductors and substrate gap, width, and thickness), the electromagnetic properties of permittivity and permeability can be tailored and/or manipulated. Alternatively, or additionally, the operating frequency of the metamaterial components can be tuned.

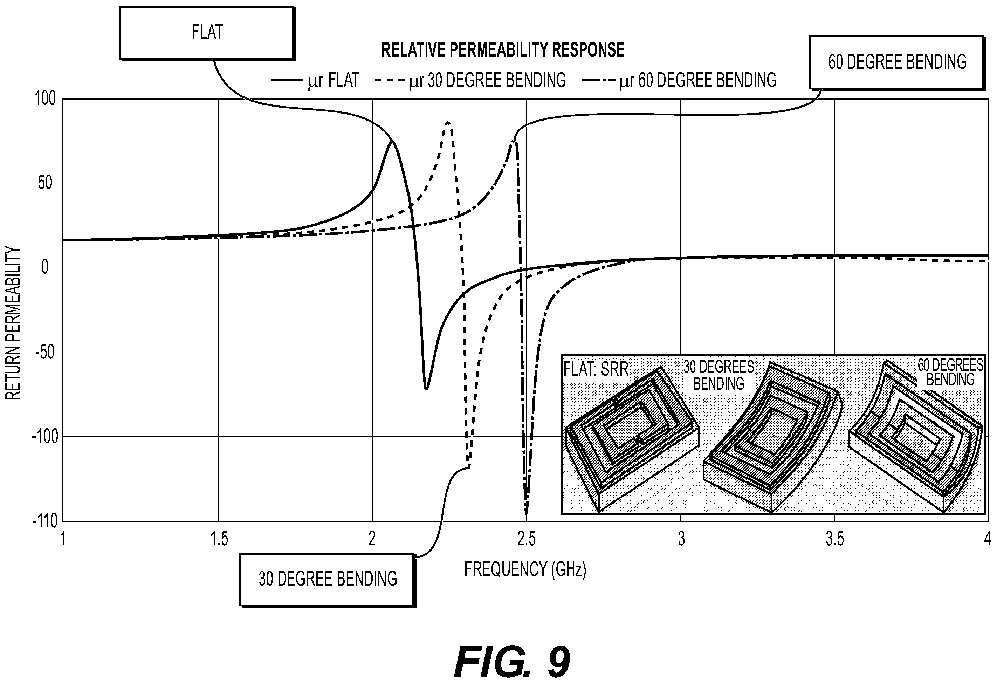

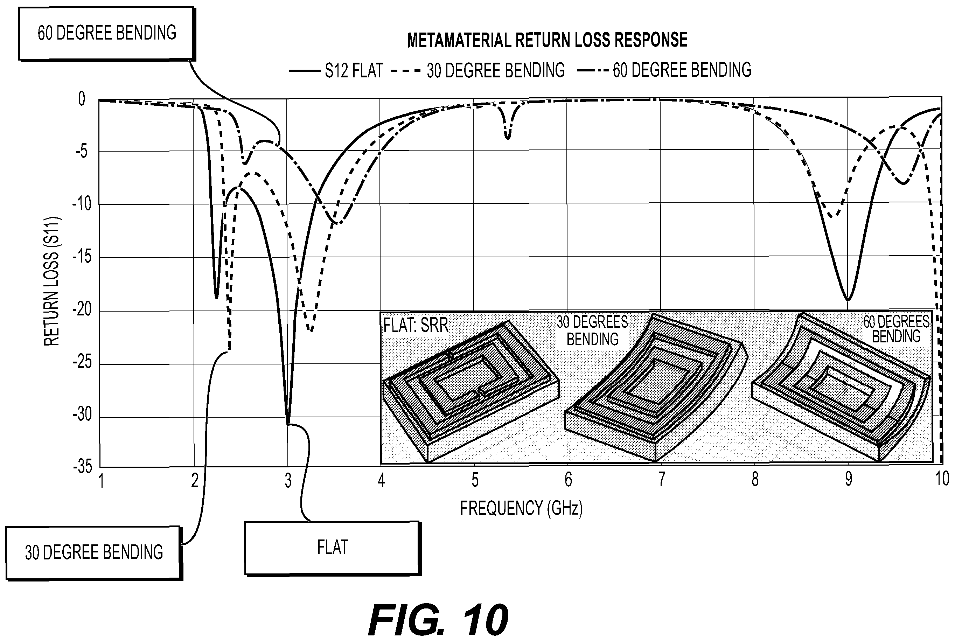

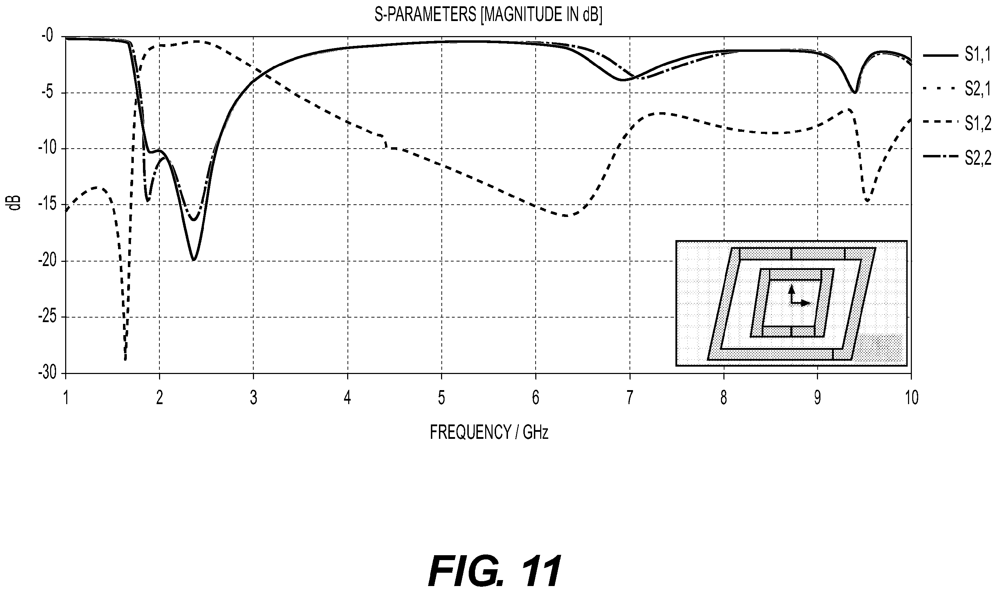

In the illustrated embodiment, an S-band resonator cell 12 can be designed using epoxy high dielectric insulating substrate. The gaps 19, 29 each can have a width, *e.g.,* approximately 200 microns, where the inner ring 14 and outer ring 24 also have widths, e.g., approximately 6 millimeters and approximately 10 millimeters, respectively. In some embodiments the split width, or distance between the rings 14, 24, and substrate height, can both be approximately 1 millimeter. The example dimensions disclosed in this paragraph have been shown to make the cell resonate at a frequency of about 2.2 GHz. FIGS. 9-11 show the permeability, permittivity, and return losses responses for multiple cases. A person skilled in the art will appreciate the design of such structure can be tuned to meet application requirements in view of the present disclosures.

For example, the dimensions of S-band resonator cell 12 may be geometrically designed to meet a specific frequency range of interest. The dimensions of cells according to some embodiments may be tuned to achieve cell resonation frequency ranges approximately between about 1 GHz to about 3 GHz. Potential modifications of the cell may be dependent, by way of non-limiting examples, on the availability of transducers and/or effective costs of the same. Moreover, metamaterial dimensions may be scaled up and down to obtain the specific characteristic of target resonance frequency (*fo*) and mechanical fitting. For example, the resonance frequency *fo* of a metamaterial is proportional to the size of the metamaterial unit structure. Thus, the larger the metamaterial cell length (*l*), the lower the resonant center frequency *fₒ* . Accordingly, twice an exemplary set of dimensions will lead to $\frac{f}{2}$ and half of the exemplary set of dimensions will lead to a resonance of 2*fₒ*.

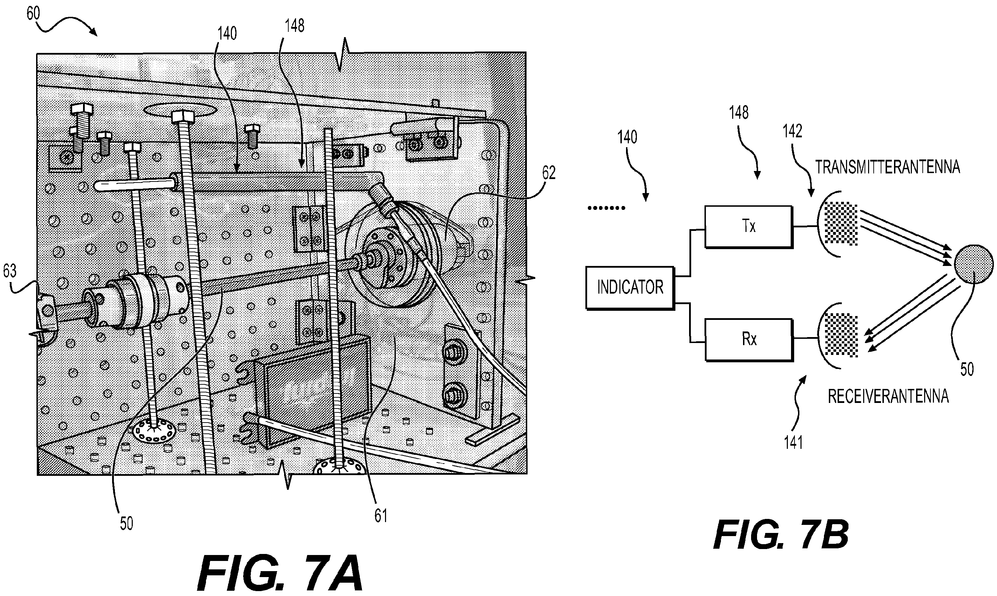

The various embodiments of the RF-MTM sensor described herein may be utilized in a variety of rotary machines. For example, an exemplary rotary machine is shown in FIGS. 7A and 7B. FIG. 7A shows a test set-up of the radio frequency sensing apparatus 10 with a rotating shaft assembly 60 that includes a rotating shaft, described as the rotating shaft 50 in the present disclosure. Measurements from the radio frequency sensing apparatus 10 can be used to monitor performance of the rotating shaft 50. The set-up can also include a power source 61, a driving motor 62, a damping motor 63, and a resistor array (not shown). The rotating shaft 50 can be coupled at one end to the driving motor 62 and at the other end to the damping motor 63. In some embodiments, the driving motor 62 and the damping motor 63 can be brushed DC motors and the rotating shaft 50 can be attached to each one with a compliant coupler. The driving motor 62 can be coupled to the power supply 61, which can include an electronic speed control such that the driving motor can be controlled, for example, by a user through a computer terminal.

In some embodiments, the radio frequency sensing apparatus 10 utilizes an MTM sensor 12 that may be directly or indirectly attached to the rotating shaft 50 such that deformations in the sensor 12 may be measured and analyzed to determine shaft characteristics. The radio frequency sensing apparatus 10 can utilize a monostatic radar sensor 140 as described in further detail below, as well as a signal source 148 as shown in FIGS. 7A and 7B. The signal source 148 can be configured, for example, to illuminate the rotating shaft 50 with continuous pulses of radar signals that can be reflected back to the monostatic radar sensor 140. The radar signals can be indicative of vibrations occurring in the rotating shaft 50. A transmitter antenna 142 of the signal source 148 and a receiver antenna 141 can communicate with the rotating shaft 50 as shown. Further detail about how the sensor 140 operates is understood and/or derivable from the illustration of FIG. 7B, the disclosures herein, and the knowledge of a person skilled in the art.

When implementing the present sensor disclosures with respect to a rotary machine, like the machine 60, it can be feasible to link the SRR metamaterials to such rotary machines in cases of both static and dynamic shafts. Feasibility of actively exciting those structures while the machine is rotating can be considered. Incident RF signal as a form of passive excitation can be utilized. Vector Network Analyzers (VNA) can be used in laboratories to analyze electrical signals of such structures. However, the complexity of these analyzers to be deployed in the field and plants can represent some challenges, especially for rotating machinery.

The foregoing notwithstanding, a person skilled in the art will appreciate that certain rotary machines can promote the need for a real-time monitoring module that has artificial intelligence (AI) capabilities and can be implemented using Field Programmable Gate Arrays (FPGA), which can have superior capabilities to be reconfigurable and can support AI processes. Such FPGA-based sensors have good local on device memories that can be useful for low latency and can enable cloud storage to be avoided, especially for onsite data monitoring. However, cloud storage can still be used for Internet of Things (IoT) remote monitoring as needed. A software Defined Radio platform (such as NI USRP 2920) can be used as effective low cost RF sensors and can meet above conditions of real-time signal monitoring and I/Q data analysis, low latency, and AI configurations. Such RF platforms can enable RF signals acquisition, generation, and visualization loops paired with LabView software. Also, the frequency selectivity can be characteristic input for the SDR platform, for instance to sweep over a broader frequency spectrum and/or tune the sensor for its optimum sensitivity. Moreover, compatibility of the synchronization of multiple devices is an advantage that can be utilized for some specific applications.

While the design and fabrication of various metamaterial structures can be a challenge, they can be an ideal choice for sensing very small features accurately. The ability to attach thin layers of these structures on a surface can be an appealing advantage. However, tailoring a structure to a specific application with a proper excitation and sensing approach is another challenge. In some exemplary embodiments, a planar metamaterial design can be excited with a transverse electromagnetic (TEM) wave excitation approach using a coaxial. This can be a proper instrumentation methodology for static structures under test. In case of dynamic rotating structures, other excitation methods can be configured and considered to be mechanically and/or electrically fit. For example, measurements using vector network analyzers (VNA) can be used.

There are two main kinds of network analyzers, VNAs and scalar network analyzers (SNAs). The differences between them include that VNAs are capable of measuring the complex quantities (*e.g*., phase and magnitude) for the reflections and transmissions in a specific network, whereas SNAs provide information about the magnitude only. VNAs have the ability to measure most microwave and RF variables, such as S-parameters, impedances, losses, gains, voltage standing wave ratios (VSWR), isolations, delays, and/or others. These analyzers provide precise and accurate corrections of the measurements to be measured. Network analyzers comprise hardware and software components to interact with the devices under tests as well as visualizing the data. A person skilled in the art will appreciate the components of VNAs and SNAs, and thus no further detailed explanation of the same is necessary for understanding of the present disclosures.

Repeated calibration of the VNAs can be a necessity to function as a sensor instrument. Complex calibration such as open circuit, short circuit, and load (O-S-L) techniques can be applied to get highly accurate measurements. There are also some preferable calibration standards that can be used for interconnects characterization. Through-Reflect-Line (TRL) procedure and Through-Line (TL) procedure are often the most common. The calibration can be performed over the whole range of the required bandwidth. These kinds of calibration standards can be used when measuring the antenna return losses as a sensing factor. The VNA can mainly be used to do measurements of scattering parameters. Its function can be based on the principles of swept-frequency generators or frequency synthesizers. Network analyzers can have a display plotting the output measurements of S-parameters in different forms, such as rectangular plots, polar plots, and/or Smith charts. In case of a steady state shaft where no rotation functions involve, this kind of calibration can be acceptable because the system stability can help to keep the reference calibration line unlikely to be changed. During the rotation of the shaft, some errors can be expected in the measurements due, at least in part, to the instability of transmitting lines flanges and/or connectors. This promotes electrical mismatch and mechanical misalignment of any installed sections of cascaded conductors and connectors via flanges. The calibration can help to subtract the effect of any associated connectors and/or cables connected to the device under test and can enable the movement of the measurements reference planes to the end of the test cables.

SNAs can be a very good candidate to practically enable this sensing mechanism and functionality in a portable manner. Practically, one way is to use commercially available portable analyzers. They can include an onboard RF power detector that can be used with a sweep function as a basic RF network analyzer. Again, this can be a good way to excite the metamaterial texturing subject to a non-moving shaft condition.

When a mechanical bending is introduced, a significant shift and change in theses parameters can be realized, which can indicate the possibility of using such artificial structures as RF sensors.

Another embodiment of a radio frequency sensing apparatus 110 in accordance with the present disclosure is described below. The radio frequency sensing apparatus 110 is substantially similar to the radio frequency sensing apparatus 10 described herein. Accordingly, similar reference numbers in the 100 series indicate features that are common between the radio frequency sensing apparatus 110 and the radio frequency sensing system 10, unless indicated otherwise or unless understood differently by a person skilled in the art. The description of the radio frequency sensing apparatus 10 is incorporated by reference to apply to the radio frequency sensing system 110, except in instances when it conflicts with the specific description and the drawings of the radio frequency sensing system 110.

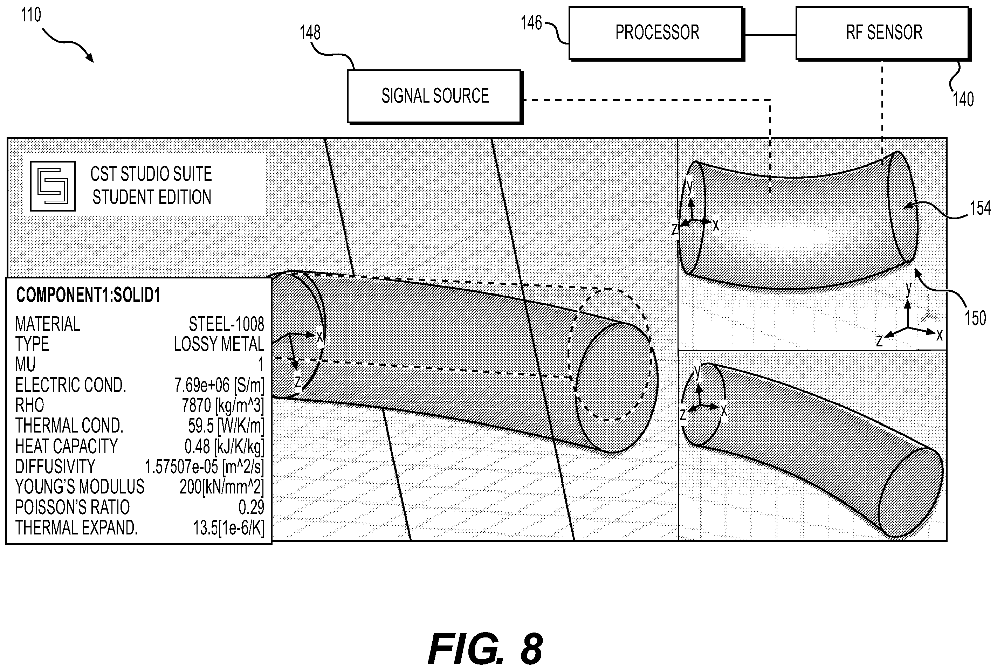

The radio frequency sensing apparatus 110 includes an absorbing metamaterial textured coating 154 applied to the rotating shaft 150 as shown in FIG. 8. The at least one radio frequency sensor includes a monostatic radar sensor 140. The processor 146 can be configured to evaluate a radar cross-section of the absorbing metamaterial textured coating 154. In some embodiments, the absorbing coating 154 can be a magnetic film absorber, as will be described below. The signal source 148 can be configured to illuminate the absorbing metamaterial textured coating 154, for example via a radar beam and/or radar signals having a wavelength. The radar signals can extend at an incident angle relative to the absorbing metamaterial textured coating 154 and can reflect off of the absorbing metamaterial textured coating 154 at a reflected angle. At least one of the incident angle, the reflected angle, or the wavelength can be optimized to maximize the radar cross-section of the absorbing metamaterial textured coating 154.

In some embodiments, the signal source 148 can be configured to illuminate the rotating shaft 150 with continuous pulses of radar signals that can be reflected back to the monostatic radar sensor 140 and picked up via the receiver antenna 141 (*see* FIG. 7B). The radar signals can be indicative of vibrations occurring in the rotating shaft 150, and the processor 146 can be configured to identify a magnitude of the vibration that has occurred in the rotating shaft 150 based on the signal received from the rotating shaft 150.

In some embodiments, in response to the monostatic radar sensor 140 receiving the radar signals, the monostatic radar sensor 140 can be configured to output voltage. In response to vibrations occurring in the rotating shaft 150, the output voltage of the monostatic radar sensor 140 can fluctuate, the fluctuation of the output voltage being correlated with the magnitude of the vibration of the rotating shaft 150. Thus, in response to the output voltage of the at least one monostatic radar sensor fluctuating, the processor 146 can be configured to measure a magnitude of the fluctuation of the output voltage to determine the magnitude of the vibration of the rotating shaft 150. Details of this process are described below.

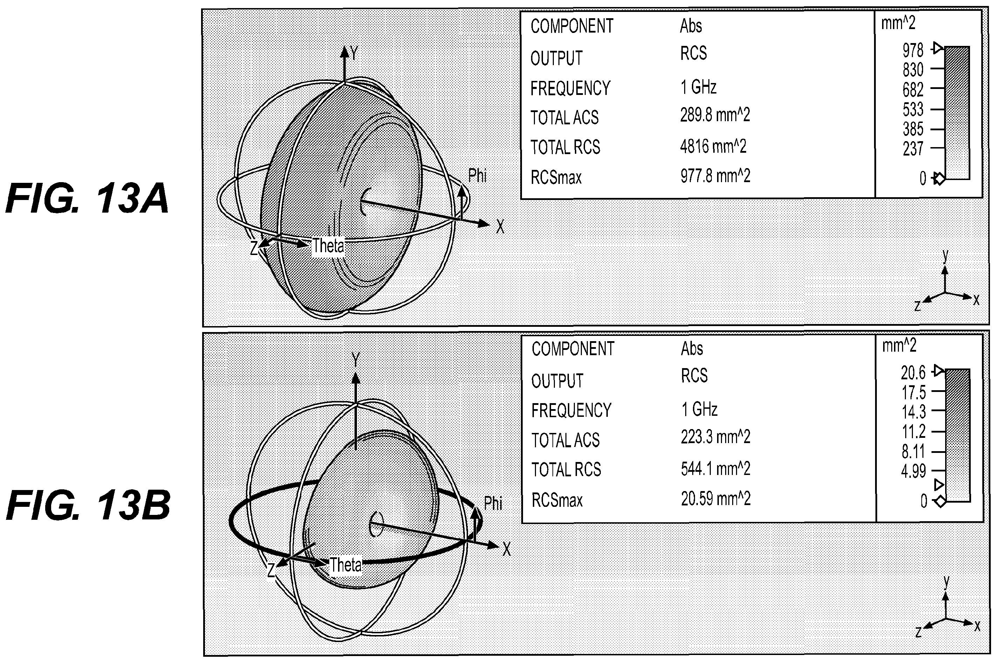

As discussed above, there is a possibility to use incident RF signal as a form of passive excitation. A preliminary simulation can be applied to investigate absorbing metamaterial versus RCS mutual influence and integrated functionality, for example as shown in FIG. 13. Radar cross-section (RCS) is a measure of how detectable an object is by radar. A larger RCS indicates that an object is more easily detected. An object reflects a limited amount of radar energy back to the source. The factors that influence this include, by way of examples, the material of which the target is made, the size of the target relative to the wavelength of the illuminating radar signal, the absolute size of the target, the incident angle (angle at which the radar beam hits a particular portion of the target, which can depend upon the shape of the target and/or its orientation to the radar source), the reflected angle (angle at which the reflected beam leaves the part of the target hit, which can depend upon incident angle), and/or the polarization of the transmitted and the received radiation with respect to the orientation of the target.

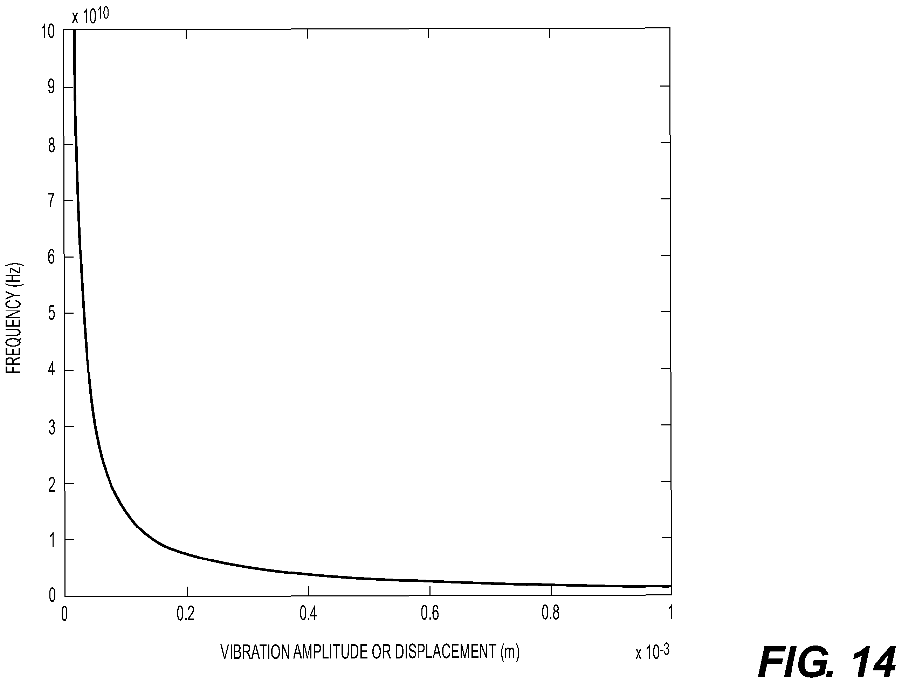

FIG. 14 shows the investigation of a metamaterial-RCS integrated functionality. RCS EM radiation patterns can be simulated for a perfect metallic conductor (as shown as a) and magnetic film absorber (as shown as b). In one embodiment, simulation can be performed assuming a cylinder target of approximately 10 cm in length and approximately 2.5 cm in diameter. This simulation investigates the influence of surface material on the RF sensor. This is, in fact, a direct influence on the reflected RF signal amplitude and can be correlated to surface material conditions as listed in Table 2 below.

**Table 2**

| Bending stress applied | Metallic cylinder | | Magnetic coated | |
|---|---|---|---|---|
| | RCS mm² | dB mm² | RCS mm² | dB mm² |
| 0° | 978 | 29.9 | 141 | 21.5 |
| 5° | 894 | 29.5 | 126 | 21 |
| 10° | 863 | 29.4 | 172 | 22.4 |

Doppler effect is also a factor in the detection of target motion where changes in the reflected signal reveal target characteristics. RF optimum sensitivity factors can depend on signal propagating frequency in the first place. Vibration can be sensed as a change in RF sensor output voltage amplitude range, and vibrations can be represented by rapid fluctuations in output voltage.

For a vibrating object, if the vibration rate in angular frequency is *ωᵥ* and the maximal displacement of the vibration is *Aᵥ*, the maximum Doppler frequency variation *f_{d}* is determined by: ${f}_{d} = \frac{2 {A}_{v} {ω}_{v}}{λ}$ (11) As a consequence, for very short wavelengths, even with very low vibration rate, any little vibration can cause large phase changes, as shown in FIG. 14.

The surrounding environment can be considered when considering RF sensors. For at least one specific application, the effects of the working environment ambient physical conditions can be linked to the signal propagation and/or the overall sensitivity of the sensor. Many effects appear when devices operate at high frequencies where electrical and physical lengths dominate the performance. The high frequency effects can become important when the signals have similar or smaller wavelengths than the transmission medium physical length through which they are propagating. The electrical analysis can become similar to the optical analysis in terms of dealing with voltages and currents as reflected and transmitted powers and coefficients that justify the adoption of the scattering parameters approach. Because this deals with free space transmission medium, the effects of skin depth and surface roughness, which can be critical in conductive media, can become insignificant in sensor implementation, at least for the matching network design stated in the above model, and as shown in FIG. 5.

Free space path losses including antennas gains and connecting cables can be of significant impact. However, atmospheric conditions such as dust and polymer contamination, in addition to surrounding temperature, can be insignificant for RF sensors, especially if compared with optical counterparts.

For the transmitting and receiving antennas, like the antennas 141 and 142 in FIG .7B, anechoic (non-echoing) electromagnetic absorber chambers can be helpful for better performance to confine RF signals within the sensing medium. Open space (open site) measurements can be ideal for practical antennas and/or radar devices. However, considering the confined space nature of the present systems, and that there is only a limited accessible area that is exposed from the machine, the anechoic chamber can be vital. The echoes can typically be referred to RF/microwave reflections. Absorbing materials can be chosen from a wide range of materials, such as polyurethane, polystyrene, polyethylene, and/or ferrite absorbers. Each material has a principle of operation and performance limit (for example, Ferrite tile can provide absorption approximately in the range of about 10 dB to about 25 dB when the RF signal is approximately in the range of about 30 MHz to about 1 GHz) and they are designed to be thick compared to the operating wavelength of the sensor. In this frequency range, the RF signals can be attenuated by approximately in the range of about 10 dB to about 25 dB when interacting with the absorber. Each absorbing material can have specific absorption characteristics and define a specific frequency range that may be obtained by manufacturers. It can be helpful to find an environment without any external effects that may make the sensing data inaccurate. RF signals also can be affected by microwave devices and/or any other radio transmitters in the surrounding area, so it can be better to disconnect any external RF power devices. The main function of these absorbers can be to prevent echoes and/or to be electromagnetic absorbent with the minimum reflections.

In some embodiments, the path distance between the monostatic radar sensor 140 antennas and the target should be long enough to ensure the far field measurements which is based on sensor's design frequency. It may be preferable to not take measurements or sensing data in the near-field zone to avoid noises. The near-field can be primarily magnetic in nature, while the far-field can have both electric and magnetic components. Near-fields are typically reactive fields, while far-fields are typically radiating regions. Measurements or sensing should be conducted in the radiating zone, which may be calculated from the transmitter based, at least in part, on target frequency. In at least some embodiments, the distance can be about 10λ₀.

In some embodiments, the processor 146 can be further configured to input the fluctuation of the output voltage and the magnitude of the vibration of the rotating shaft 150 into a machine learning algorithm, where the machine learning algorithm can be configured to utilize the fluctuation of the output voltage and/or the magnitude of the vibration of the rotating shaft 150 to learn and predict the correlation between the fluctuation of the output voltage and the magnitude of the vibration of the rotating shaft 150. The processor 146 can be further configured to utilize the fluctuation of the output voltage and the magnitude of the vibration of the rotating shaft 150 to train a neural network classifier.

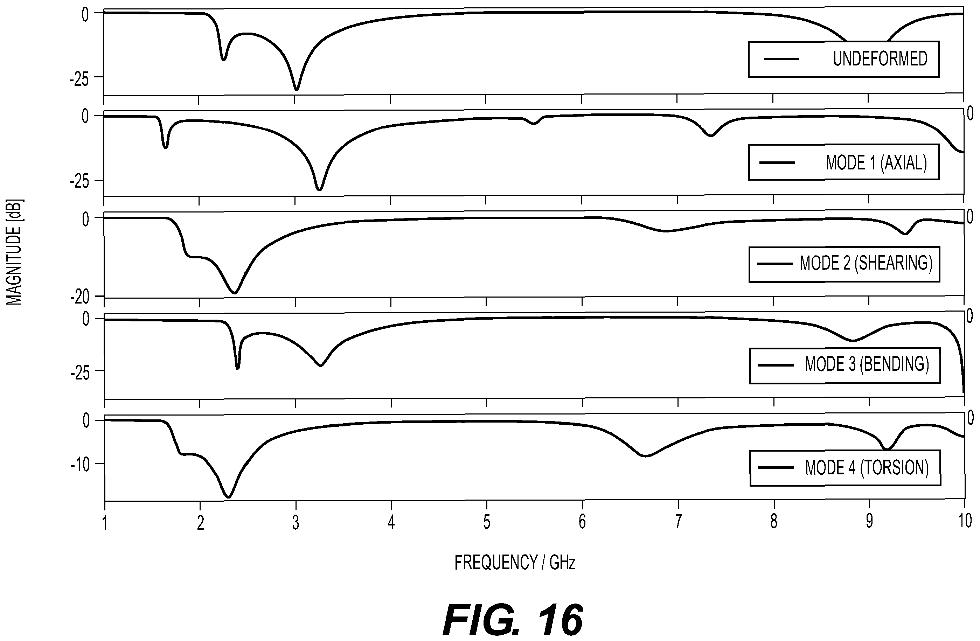

With regard to the embodiment including the radio frequency sensing apparatus 10 having the unit cell 12 described above, at least two sets of simulations have been conducted with Computer Simulation Technology (CST) Studio. As shown in FIG. 16, the first set of simulations qualitatively demonstrates the effectiveness of the MTM sensor 12 in distinguishing different modes of deformation, including axial (Mode 1), shearing (Mode 2), bending (Mode 3), and torsional (Mode 4). As clearly displayed, the four fundamental modes of deformations result in visibly different responses in return loss. In all cases, the frequency responses exhibit two resonance peaks at the sub-5GHz region. Mode 1 shifts the first resonance peaks to lower frequencies and the second resonance frequencies to higher values than the undeformed unit cell 12. Mode 1 also maintains the magnitude of both peaks, and Mode 3 results in a significantly reduced magnitude in the second resonance peak. For Mode 2 and 4 deformations, the gap between the first and second peaks are closer to the extent that they partially merge. The similarities between Modes 1 and 3, and between Modes 2 and 4 are likely because the geometrical deformations are similar. All four modes of deformation demonstrate multiple resonance peaks in the region approximately between 5GHz and 10GHz, while in the undeformed state, only one resonance peak is observed.

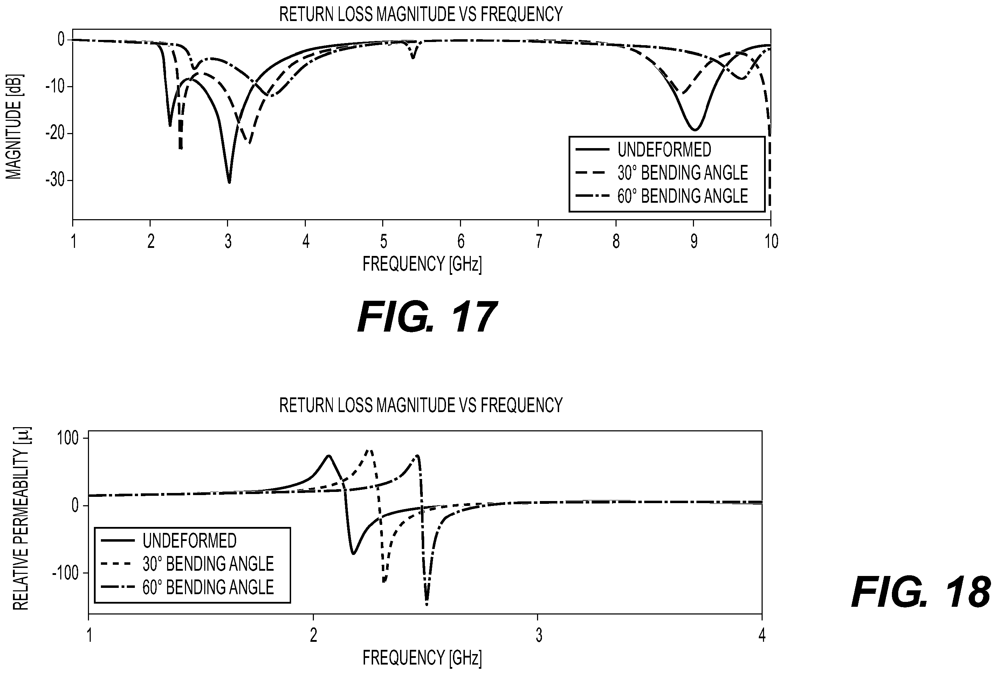

The second set of simulations quantitatively demonstrates the unit cell 12 responding capability within a single deformation mode with various amplitudes. Without loss of generality, Mode 3, bending deformation, is used. An un-deformed specimen, one with an approximately 30° bending angle, and one with an approximately 60° bending angle, are simulated. As demonstrated in FIG. 17, an increasing magnitude in Mode 3 deformation on the sensor structure magnifies the relative permeability and causes a shift towards higher resonance frequencies. As displayed in FIG. 18, the return loss resonance peak can decrease significantly from about -30dB to about -10dB and can shift towards higher frequencies with an increasing bending angle. The apparent trends in relative permeability and return loss quantitatively can validate the capability of the sensor to distinguish deformation amplitudes within a single deformation mode.

Thus, an elastic metamaterial sensing methodology for condition monitoring of rotating shafts is disclosed herein. The MTM unit cell 12 can be used to identify local deformation on the shaft 50 surface by monitoring the frequency responses of the relative permeability and/or return losses of the unit cell. A numerical model can be derived that directly bridges the return loss and relative permeability to four mechanical input modes on the shaft 50. The frequency responses of a unit cell 12, under various modes and amplitudes of deformations, can be simulated. The simulation can demonstrate apparent signal shifts and distinctive patterns that validate the proposed sensing methodology.

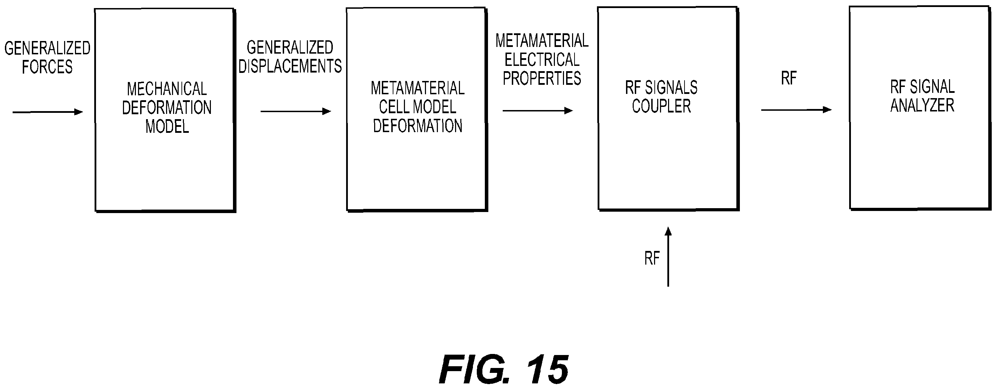

Additional simulations have been conducted and studied utilizing the RF sensors described above, some of which will be described below. FIG. 15 shows mechanical and electrical modeling of a deformed unit cell. This figure illustrates the inputs and outputs of the model. The purpose of such model is to mathematically comprehend mechanical-electrical parameters relationship and simulate a sensing response. Researchers and others can rely on this coupled model where its physical parameters can be examined before the actual system is built. These models may be helpful to tune a specific resonating structure to a specific mechanical application, and/or may be used in examining longitudinal and/or torsional strains with various angular deformation and/or loading cases. The type of substrate can be injected in the model in case of using different materials. Resonance frequency can be tuned by optimizing the physical parameters such as gap and/or width. Frequency tuning can be dependent on such parameters, thus enabling a wider spectrum of applications and sensitivity enhancement.

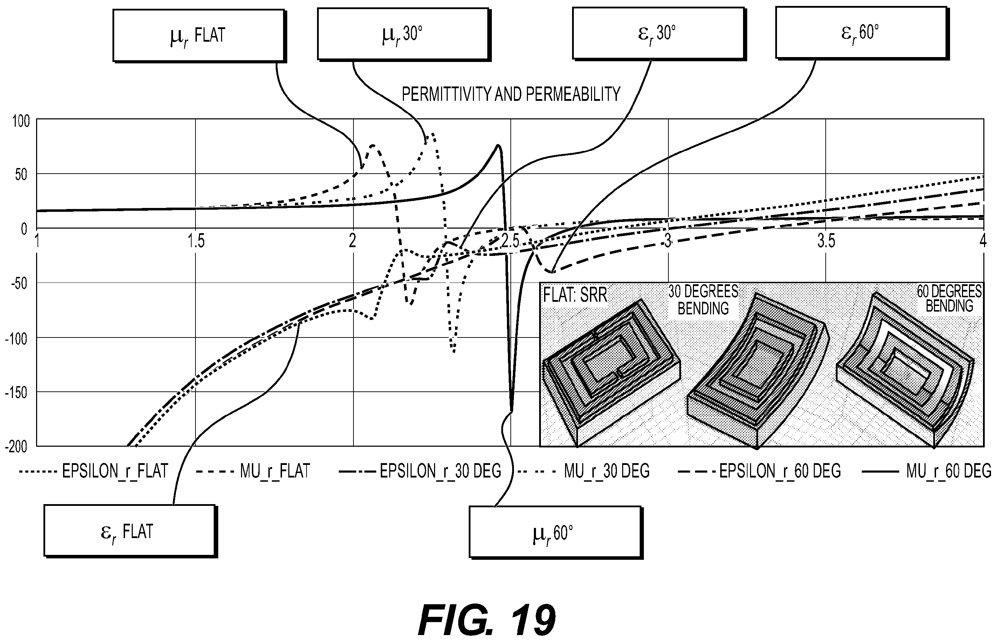

FIG. 19 represents simulation results for mechanical stress effect on resonator texturing. Permeability can be used as the sensing mechanism. The x-axis represents the frequency range while the y-axis represents the real permeability values. Shown are three different plots corresponding to three different deformation cases (flat, 30 degrees bending, and 60 degrees bending). Permeability is changing a mechanical bending is introduced on the sensor structure and the real part increases with increasing bending angles. Increasing bending increases the negative permeability and causes a positive frequency shift to higher values.

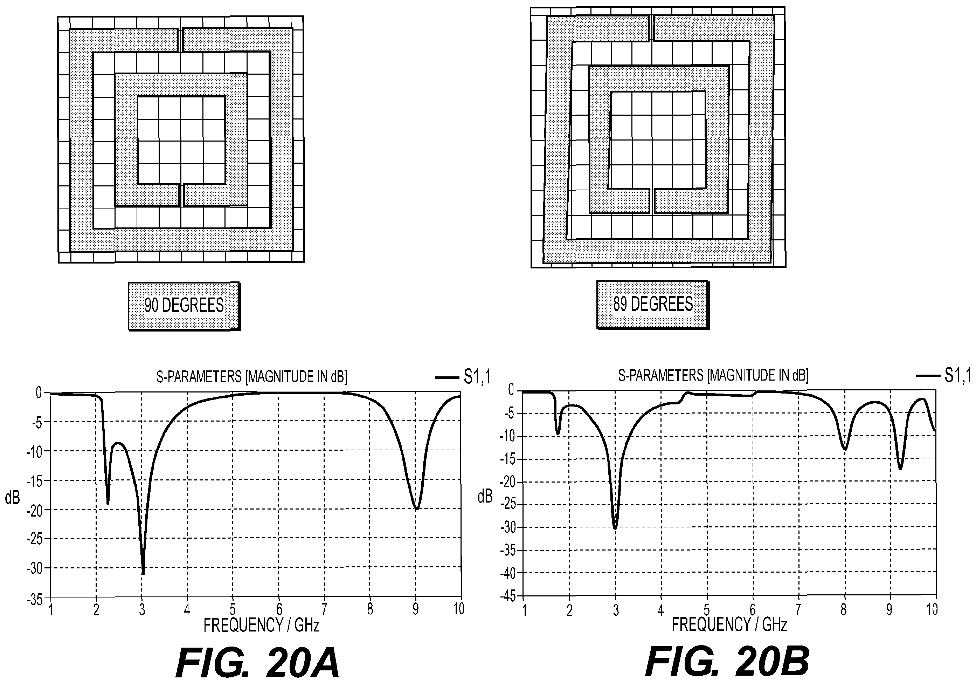

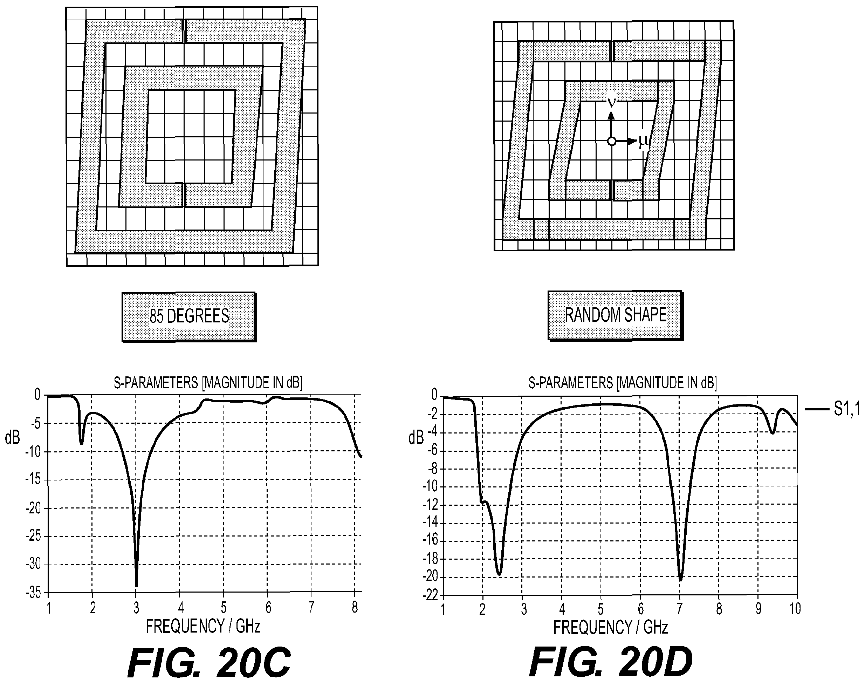

FIGS. 20A-20D show that return loss analysis provides very distinctive mapping, which holds huge potential for regression models. In each plot, the x-axis represents the frequency range while the y-axis represents the return loss values. RL responses have specific patterns for some anomalies types that can be used to train a machine learning algorithm and build an anomaly classifier. This analysis covers the variation of RL performance of metamaterial structure with different mechanical deformation cases. There is a strong relationship between the RL parameter and deformation. The proposed model and simulation results can be used to predict the type and effect of the shaft deformation and correlate it to its origin causes. A gradual changing state in RL can be monitored in real time with the proper instrumentation enabling effective condition monitoring tool. Overall, when a mechanical bending was introduced, a significant shift and change in theses parameters were noticed, which can indicate the possibility of using such artificial structures as RF sensors. The return loss analysis provides very distinctive mapping, which holds huge potential for regression models. RL responses have specific patterns for some anomaly types that can be used to train a machine learning algorithm and build an anomaly classifier.

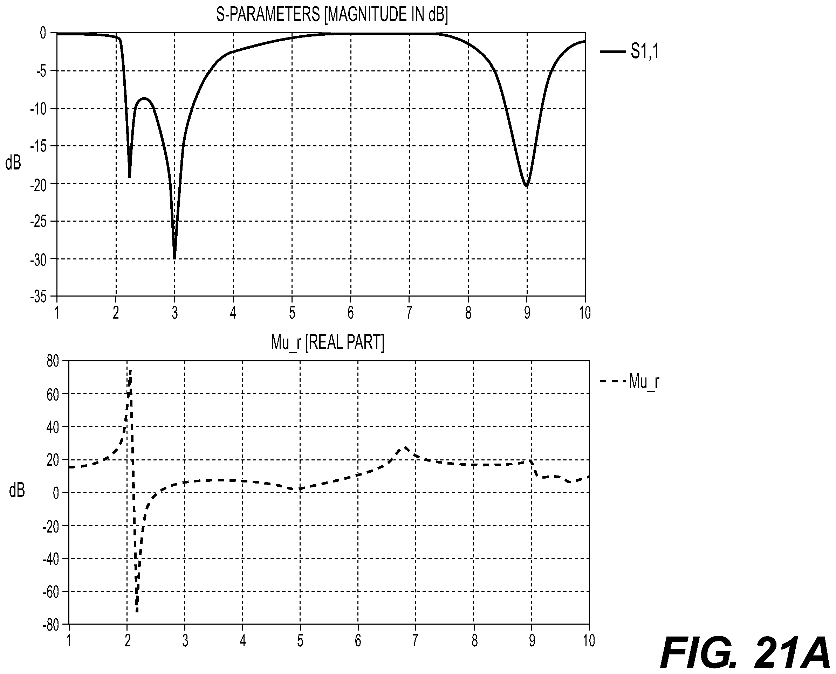

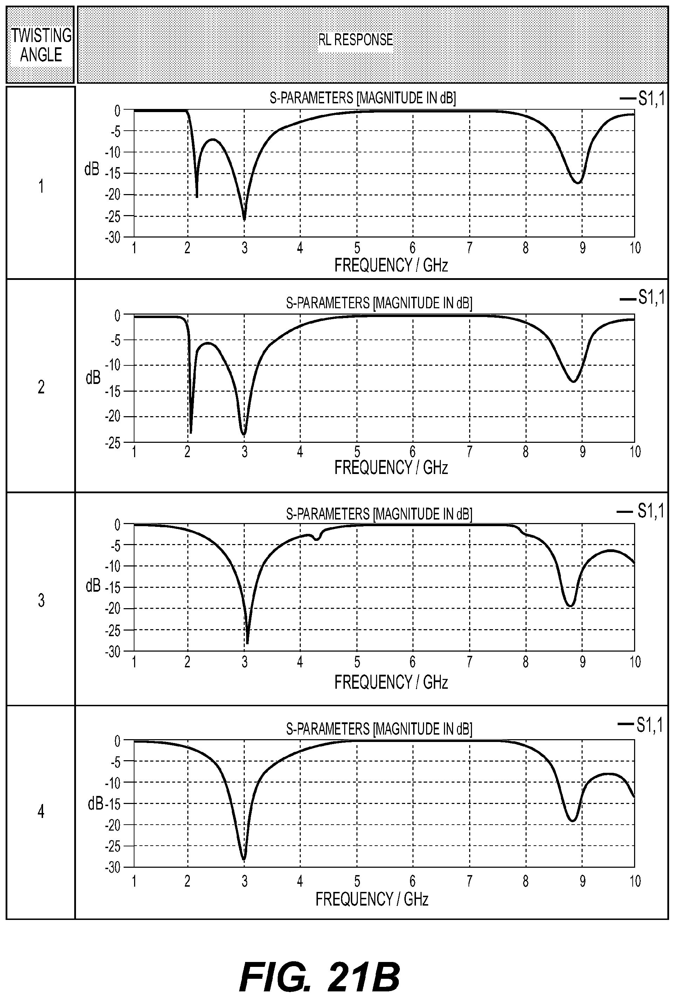

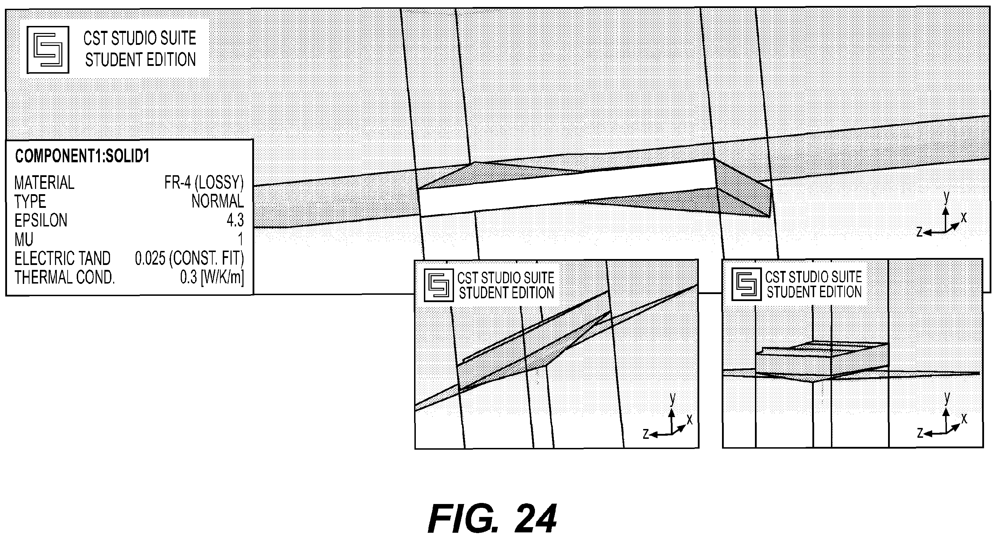

As can be seen in FIGS. 21A and 21B, the RL response can change as twisting forces are applied as compared to the original reference case on the left. Results and analysis of a twisted structure are shown in FIG. 24. Referring again to FIG. 12, it has been demonstrated via numerical simulation that the RF sensing phenomena is a viable approach to detect operating anomalies such as excessive bending and/or torsion. RF metamaterial can be used as a very sensitive sensor for mechanical deformation. An increase in substrate bending can increase metamaterial negative permeability and can cause a positive frequency shift to higher values. Also, return loss can be a significant sensing factor and can prove to be sensitive to any mechanical change in the system. Further, it can have responses with specific patterns for some anomalies types that can be used to train a machine learning algorithm.

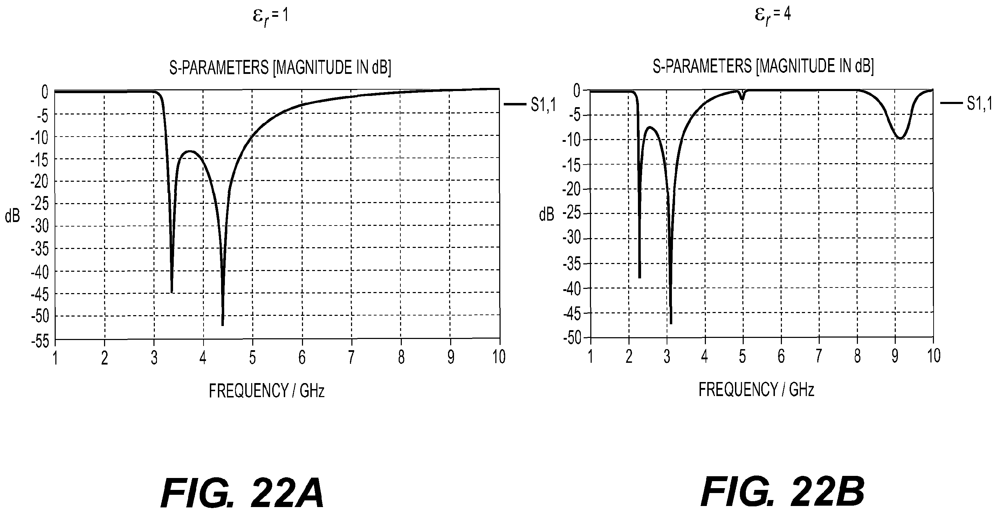

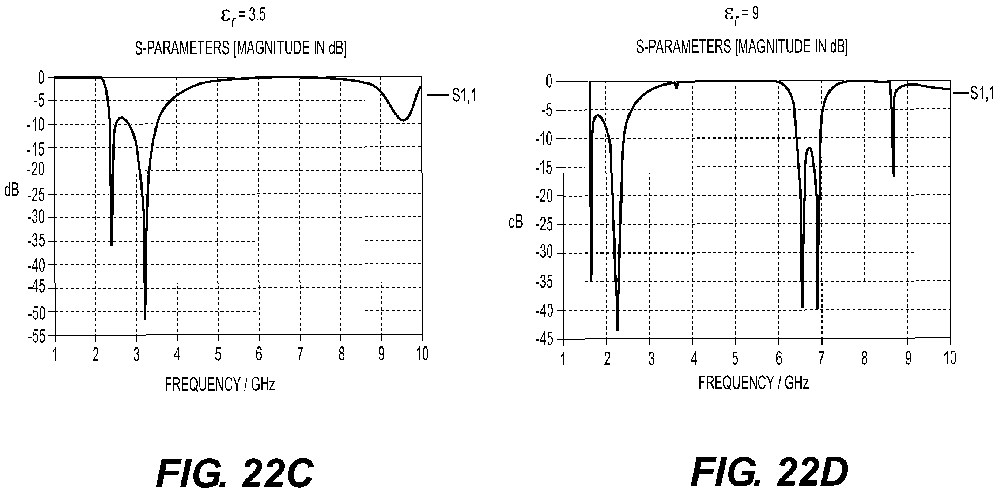

As shown in FIGS. 22A-22D, it can be seen that the reason behind the shifts observed in the above mentioned results at least because of large permittivity of a medium causes light to propagate slower. This can be verified from Ampere's Law, the 4th Maxwell equation, which can be written in a vacuum as: $\frac{\partial E}{\partial t} = \frac{1}{{ε}_{0} {μ}_{0}} ∇ \times B$ (12) This says that physically the coupling between the time variation of E and curl of B is inversely proportional to the vacuum permittivity, making it plausible that a larger vacuum permittivity would give a lower phase velocity of E wave.

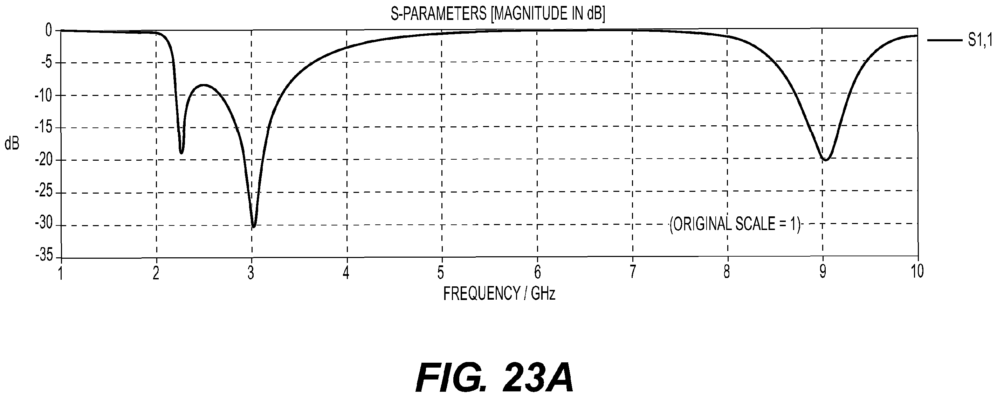

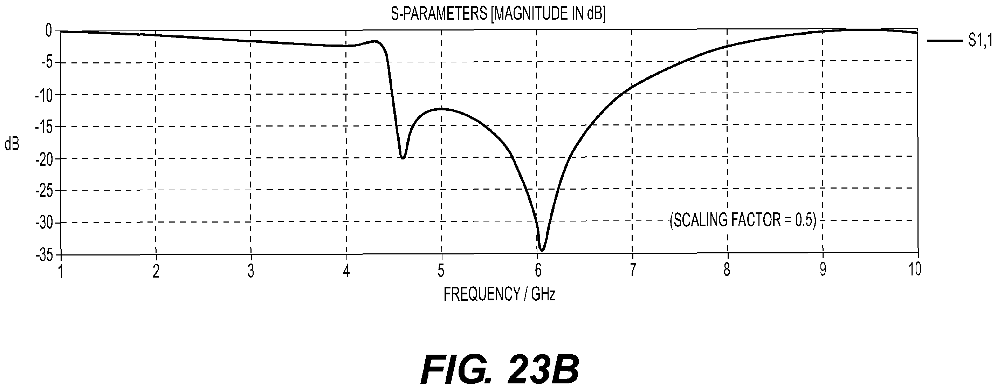

Also, as shown in FIGS. 23A and 23B, metamaterial dimensions can be scaled up and down to obtain the specific characteristic of target resonance frequency (*fo*) and mechanical fitting. The resonance frequency *fo* of an metamaterial can be proportional to the size of the metamaterial unit structure, the larger the metamaterial cell length (*l*), the lower the resonant center frequency *fₒ*, as shown above in Equation (9).

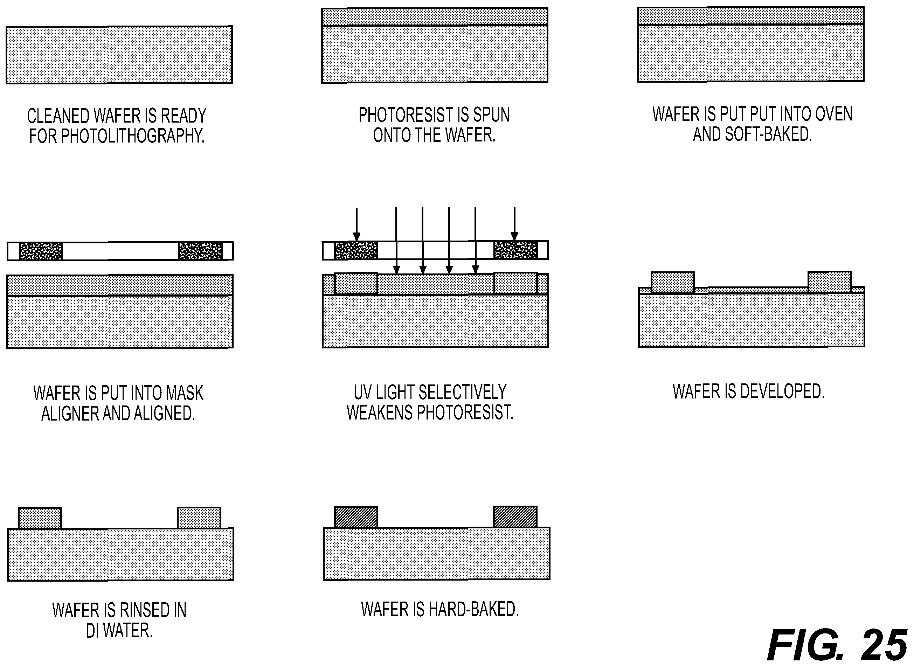

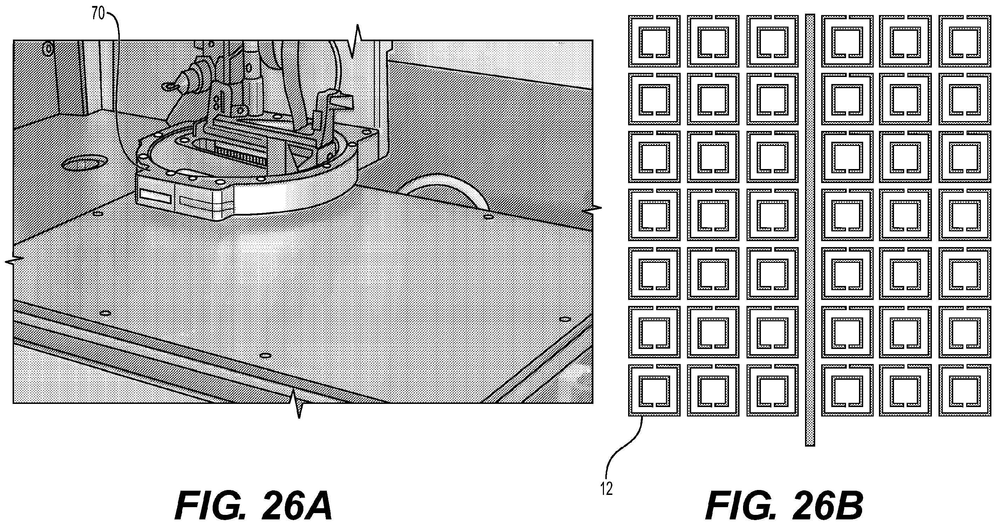

There are many ways to realize these MTM structures by different ways of fabrication such as, photolithography techniques, sputtering deposition, chemical etching, ion beam, and/or inkjet deposition printing. An exemplary process of fabricating an MTM structure is shown in FIG. 25. The process may include a first step of cleaning a wafer such that the wafer is ready for photolithography, spinning photoresist onto the wafer, putting the wafer into an over and soft-baking the wafer, and putting the wafer into a mask aligner and aligning the wafer. The process may further include selectively weakening the photoresist with UV light, developing the wafer, rinsing the wafer in DI water, and hard-baking the wafer. The main advantages of inkjet electronics is in the stretchable flexible electronics that require materials with low sintering temperature and smooth surface roughness with minimum deformation. FIGS. 26A and 26B show an example of an inkjet printer 70 that can directly deposit functional materials to form a variety of patterns of unit cells 12 onto a substrate 34.

Stretchable conductors include electronic conductors, e.g., metal nanoparticles (NPs), Ag NWs , Ag flakes, fractal Ag nanostructures, Cu NWs, carbon nanotubes (CNTs), graphene, serpentine-shaped metallic wires, conductive polymers, and/or their composites. Substrate selection can depend, at least in part, on the need to achieve large and reversible deformation for strains applied on certain axes. In some embodiments, the substrate can have a stretchability up to about 250% under elastic deformation and about 325% without failure. Stretchable elastomers can be used as soft substrates in many electronic devices, such as natural rubber (NR), styrene butadiene rubber (SBR), ethylene-propylene-diene monomer (EPDM), polyurethane (PU), thermoplastic polyurethane (TPU), and/or predominant poly(dimethylsiloxane) (PDMS). In at least some embodiments, the MTM sensor can be fabricated using silver nanoparticles with the following criteria in mind: approximately 40wt% Ag nanoparticle ink formulated with a fluoropolymer binder or with a stretchable polyurethane binder, sheet resistance target value having high electrical conductivity and the lowest possible sheet resistance, adhesion requirements being a strong adhesion to substrate, a maximum curing temperature of up to about 200C, and resistance to water or solvents after curing.

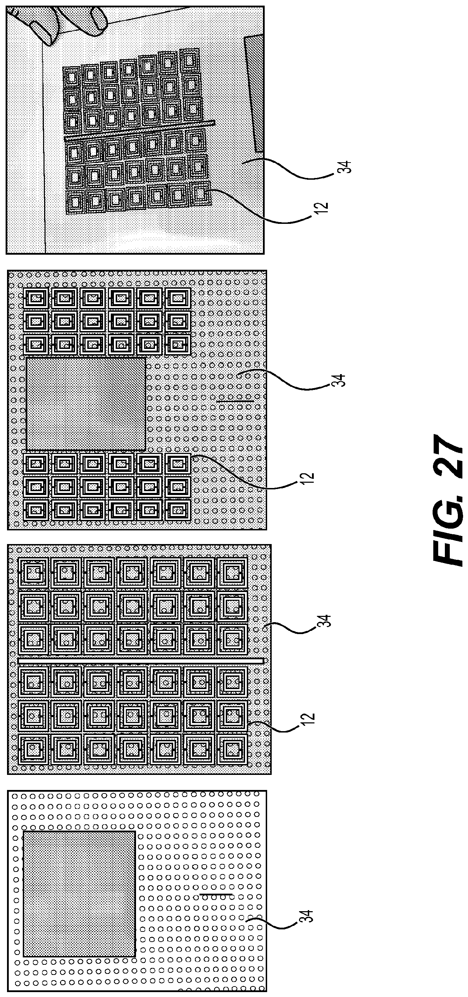

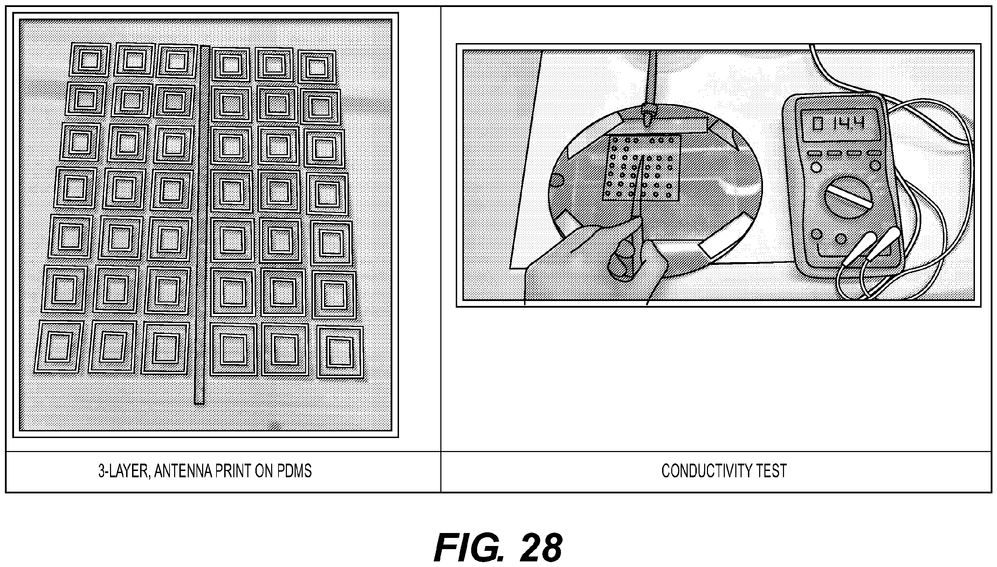

FIG. 27 illustrates some of the fabricated structures of unit cells 12 arranged on substrates 34 that may be utilized in the embodiments described above. These figures illustrate printing results on PET using Novacentrix JS-A211. Quality print results were achieved on PET. The ink dried immediately after printing and the antenna showed conductivity. FIG. 28 shows printing results with a PDMS substrate and silver nanoparticles, which can yield promising results. These structures showed uniform heat distribution, improved conductivity, a uniform surface, fewer cracks, and less roughness.

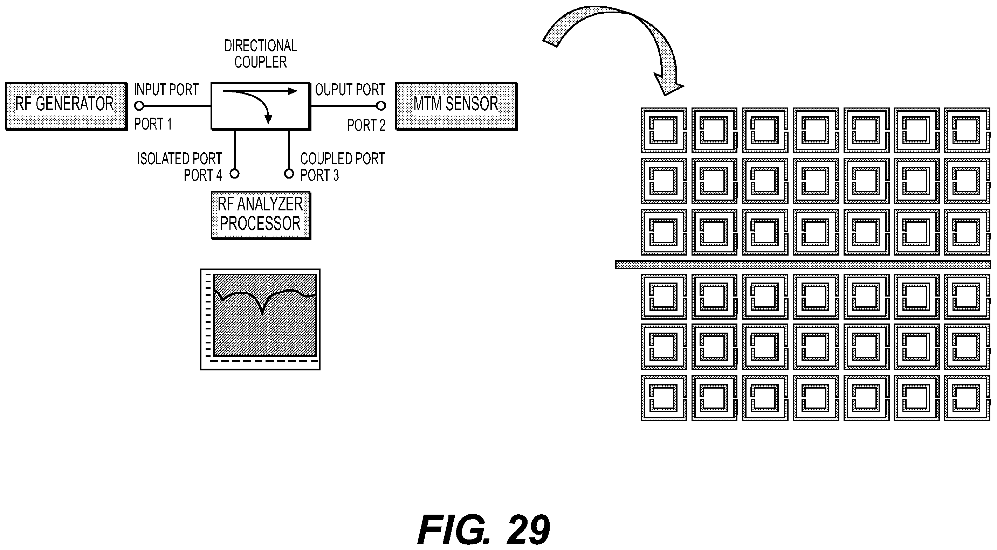

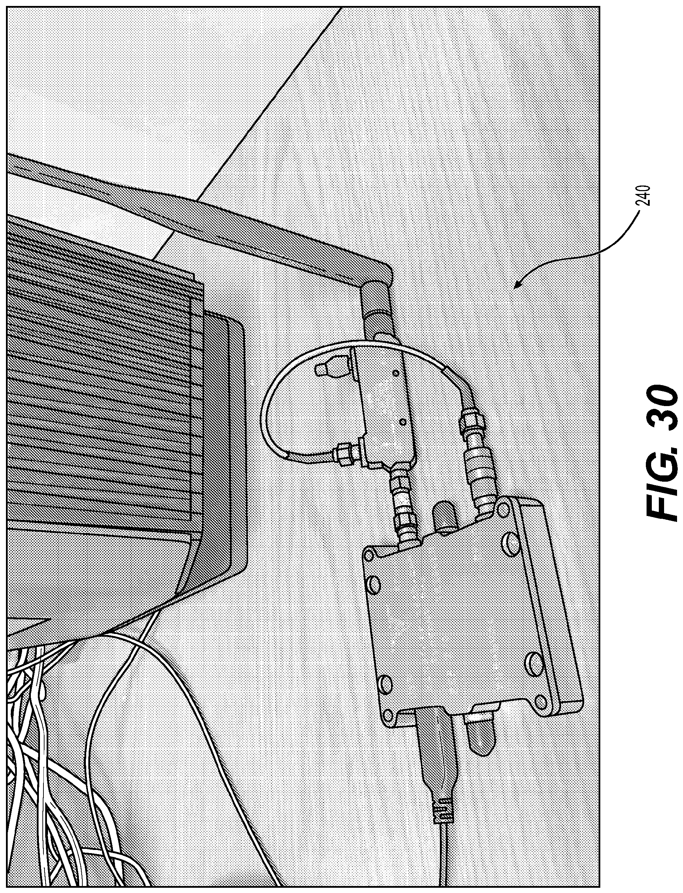

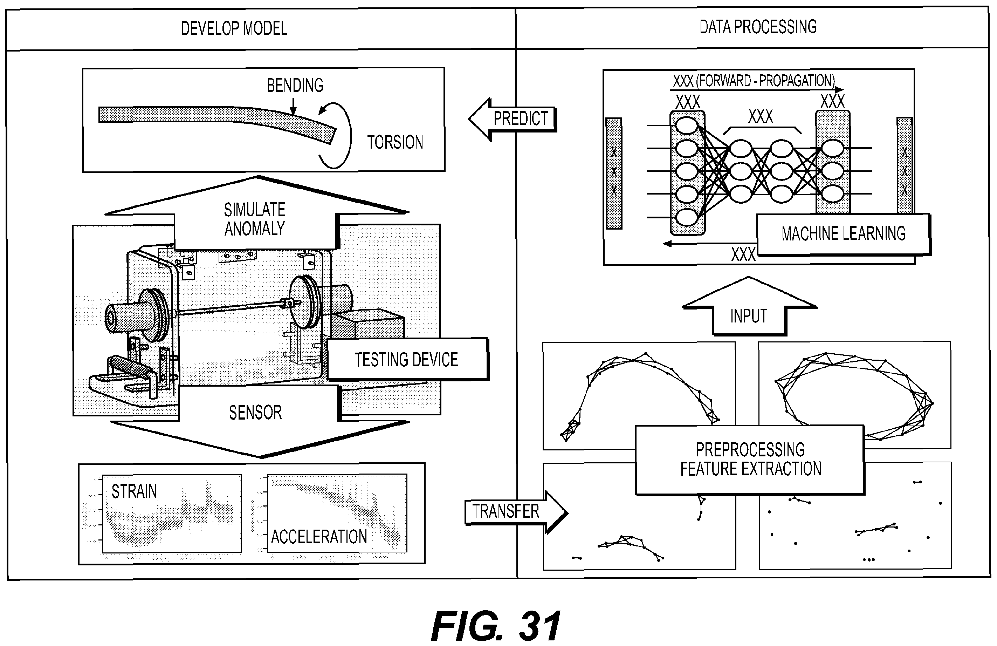

FIG. 29 shows a schematic representation of one exemplary way how to instrument the sensor and build associated electronics such as an RF generator and an analyzer. FIG. 30 shows an example of how return loss measurements may be done by using handheld analyzer 240 and not complex bulky analyzers. FIG. 31 shows a schematic representation of how machine learning and/or data analytics can be considered to predict failures and/or develop a diagnostic and/or prognostic model.

Conclusions from the above-described simulations are as follows. It has been demonstrated via numerical simulation and theory that shaft texturing with RF metamaterial has potential for strain detection. Additionally, metamaterial is sensitive to stretching and twisting compared to bending. Furthermore, RL pattern has changed drastically in case of severe strains such as stretching and twisting (advantage for ML and algorithmic classification). Even further, RL and frequency shift are the most sensitive indicative parameters. Moreover, at significant higher bending angles, frequency shift is very large. Also, inkjet printing is promising low cost and efficient process with high resolution down to about 100 microns.

In one embodiment of the present disclosure, a solution is related to return losses responses of RF metamaterials that they have specific patterns for strain anomalies types that can be used to train a neural network classifier. Metamaterial texturing is more powerful compared to retrofit strain gauge since it is a thin light film material covering a larger surface area of an object of interest and provide a direct sensing mechanism for specific and broad range of strain anomalies such as tension, torsion and flexure.

In one embodiment of the present disclosure, a solution is related to vibration phenomena as an intrinsic component in any strain anomaly and the utilization of it to define a specific strain class. In this embodiment, a RF monostatic radar setup can illuminate a rotating shaft with continuous pulses that can be reflected back to a receiver module where deeper analysis can be performed in conjunction with a machine learning algorithm.

In one embodiment of the present disclosure, a solution is related to data fusion and a process of integrating multiple data sources to produce more consistent, accurate, and/or useful information than can provided by any individual data source. The sources can include strain gauge, acoustic sensor, RF module, and/or metamaterial texturing all combined in one sensory system and analyzed through one data analytic platform. Data fusion analytics can be used along with the physical concept forming a dual cyber physical system.

Thus, in these aforementioned embodiments, a processing system compares the monitored magnitudes to reference magnitudes for the rotating machine. Such a processing system can be implemented using computer programs executed on a computer, an example of which will now be described. This is only one example of a computer and is not intended to suggest any limitation as to the scope of use or functionality of such a computer. The system described herein can be implemented in one or more computer programs executed on one or more such computers.

A general-purpose computer generally processes computer program code using a processing system, and may include the processors 46, 146 described above. Computer programs on a general-purpose computer typically include an operating system and applications. The operating system is a computer program running on the computer that manages and controls access to various resources of the computer by the applications and by the operating system, including controlling execution and scheduling of computer programs. The various resources typically include memory, storage, communication interfaces, input devices, and output devices. Management of such resources by the operating typically includes processing inputs from those resources.

Examples of such general-purpose computers include, but are not limited to, larger computer systems such as server computers, database computers, desktop computers, laptop and notebook computers, as well as mobile or handheld computing devices, such as a tablet computer, hand held computer, smart phone, media player, personal data assistant, audio or video recorder, or wearable computing device.

An example computer comprises a processing system including at least one processing unit and a memory. The computer can have multiple processing units and multiple devices implementing the memory. A processing unit can include one or more processing cores (not shown) that operate independently of each other. Additional co-processing units, such as a graphics processing unit, also can be present in the computer. The memory may include volatile devices (such as dynamic random access memory (DRAM) or other random access memory device), and non-volatile devices (such as a read-only memory, flash memory, and the like) or some combination of the two, and optionally including any memory available in a processing device. Other memory such as dedicated memory or registers also can reside in a processing unit. The computer may include additional storage (removable or non-removable) including, but not limited to, magnetically-recorded or optically-recorded disks or tape. Such additional storage can be implemented using removable storage or non-removable storage. The various components of the computer typically are interconnected by an interconnection mechanism, such as one or more buses.

A computer storage medium is any medium in which data can be stored in and retrieved from addressable physical storage locations by the computer. Computer storage media includes volatile and nonvolatile memory devices, and removable and non-removable storage devices. Memory, removable storage and non-removable storage are all examples of computer storage media. Some examples of computer storage media are RAM, ROM, EEPROM, flash memory or other memory technology, CD-ROM, digital versatile disks (DVD) or other optically or magneto-optically recorded storage device, magnetic cassettes, magnetic tape, magnetic disk storage or other magnetic storage devices. Computer storage media and communication media are mutually exclusive categories of media.

The computer may also include communications connection(s) that allow the computer to communicate with other devices over a communication medium. Communication media typically transmit computer program code, data structures, program modules or other data over a wired or wireless substance by propagating a modulated data signal such as a carrier wave or other transport mechanism over the substance. The term "modulated data signal" means a signal that has one or more of its characteristics set or changed in such a manner as to encode information in the signal, thereby changing the configuration or state of the receiving device of the signal. By way of example, and not limitation, communication media includes wired media such as a wired network or direct-wired connection, and wireless media include any non-wired communication media that allows propagation of signals, such as acoustic, electromagnetic, electrical, optical, infrared, radio frequency and other signals. Communications connections are devices, such as a network interface or radio transmitter, that interface with the communication media to transmit data over and receive data from signals propagated through communication media.

The communications connections can include one or more radio transmitters for telephonic communications over cellular telephone networks, or a wireless communication interface for wireless connection to a computer network, or a network interface card for connection to a wired computer network. For example, a cellular connection, a Wi-Fi connection, an Ethernet connection or other network connection, a Bluetooth connection, and other connections may be present in the computer. Such connections support communication with other devices, such as to support voice or data communications.

The computer may have various input device(s) such as various pointer (whether single pointer or multi-pointer) devices, such as a mouse, tablet and pen, touchpad and other touch-based input devices, stylus, image input devices, such as still and motion cameras, audio input devices, such as a microphone. The compute may have various output device(s) such as a display, speakers, printers, and so on, also may be included. These devices are well known in the art and need not be discussed at length here.

The various storage, communication connections, output devices and input devices can be integrated within a housing of the computer, or can be connected through various input/output interface devices on the computer.

An operating system of the computer typically includes computer programs, commonly called drivers, which manage access to the various storage, communication connections, output devices and input devices. Such access can include managing inputs from and outputs to these devices. In the case of communication connections, the operating system also may include one or more computer programs for implementing communication protocols used to communicate information between computers and devices through the communication connections.

Each component (which also may be called a "module" or "engine" or the like), of a computer system and which operates on one or more computers, can be implemented as computer program code processed by the processing system(s) of one or more computers. Computer program code includes computer-executable instructions or computer-interpreted instructions, such as program modules, which instructions are processed by a processing system of a computer. Such instructions define routines, programs, objects, components, data structures, and so on, that, when processed by a processing system, instruct the processing system to perform operations on data or configure the processor or computer to implement various components or data structures in computer storage. A data structure is defined in a computer program and specifies how data is organized in computer storage, such as in a memory device or a storage device, so that the data can accessed, manipulated and stored by a processing system of a computer.

The specific implementations described above are disclosed as examples only. One skilled in the art will appreciate further features and advantages of the disclosure based on the above-described embodiments. Accordingly, the disclosure is not to be limited by what has been particularly shown and described. The scope of the present invention is defined solely by the appended claims. For example, while the present embodiments often include a single feature (*e.g*., a unit cell 12, two rings 14, 24, etc.), it is possible that multiple of the same features (e.g., two or more unit cells 12, two or more pairs of rings 14, 24, etc.) can be incorporated into the design of an radio frequency sensing apparatus without departing from the scope of the present invention as defined by the appended claims.

## Claims

1. A radio frequency sensing apparatus (110) for detecting an anomaly in a rotating machine, comprising:
a rotating machine including a rotating shaft (150);
at least one radio frequency sensor configured to monitor at least one signal received from the rotating machine, the at least one signal being indicative of at least one of resonance shift, magnetic permeability, or return loss magnitude; and
a processor (146) configured to compare the at least one of resonance shift, magnetic permeability, or return loss magnitude of the at least one signal to a corresponding reference resonance shift, reference magnetic permeability, or reference return loss magnitude for the rotating machine, the processor further configured to determine whether the anomaly has occurred in the rotating shaft based on the comparison, and to identify at least one type of anomaly of a plurality of types of anomalies including the anomaly that has occurred in the rotating shaft based on the comparison,
**characterized in that** an absorbing metamaterial textured coating (154) is applied to the rotating shaft, and wherein the at least one radio frequency sensor comprises a monostatic radar sensor (140) configured to monitor the at least one signal being reflected off of the absorbing metamaterial textured coating in response to the at least one signal being directed at the absorbing metamaterial textured coating by at least one signal source.

2. The radio frequency sensing apparatus of claim 1, further comprising:
at least one metamaterial unit cell (12) configured to be arranged on the rotating shaft and configured to deform in response to the at least one type of anomaly being present in the rotating machine,
wherein the at least one signal is transmitted from at least one signal source and reflected off of and transmitted through the at least one metamaterial unit cell such that the at least one radio frequency sensor receives the at least one signal.

3. The radio frequency sensing apparatus of claim 2, wherein the at least one metamaterial unit cell is configured to be adhered to an outer surface of the rotating shaft.

4. The radio frequency sensing apparatus of any preceding claim,
wherein the plurality of types of anomalies comprises one or more of: tension of the rotating shaft, vibration of the rotating shaft, bending of the rotating shaft, torsion of the rotating shaft, or strain of the rotating shaft, and
wherein each of the comparisons of the resonance shift to the reference resonance shift, the magnetic permeability to the reference magnetic permeability, or the return loss magnitude to the reference return loss magnitude correlates to at least one of the plurality of types of anomalies having occurred in the rotating shaft.

5. The radio frequency sensing apparatus of any preceding claim, wherein the processor is configured to at least one of (i) input the comparison of the at least one of resonance shift, magnetic permeability, or return loss magnitude to the corresponding reference resonance shift, reference magnetic permeability, or reference return loss magnitude for the rotating machine into a machine learning algorithm, wherein the machine learning algorithm is configured to utilize the comparison to learn and predict at least one association of at least one of the resonance shift, the magnetic permeability, or the return loss magnitude with at least one type of anomaly of the plurality of anomalies, or (ii) utilize the comparison of the at least one of resonance shift, magnetic permeability, or return loss magnitude to the corresponding reference resonance shift, reference magnetic permeability, or reference return loss magnitude for the rotating machine to train a neural network classifier.

6. The radio frequency sensing apparatus of claim 2, wherein the processor is further configured to produce a mechanical deformation model to identify the at least one type of anomaly occurring in the rotating shaft, the mechanical deformation model being based on (i) surface deformation of the rotating shaft caused by at least one of tension of the rotating shaft, vibration of the rotating shaft, bending of the rotating shaft, torsion of the rotating shaft, or strain of the rotating shaft, (ii) geometrical deformation of the at least one metamaterial unit cell, and (iii) a comparison of the surface deformation of the rotating shaft and the geometrical deformation of the at least one metamaterial unit cell.

7. The radio frequency sensing apparatus of claim 2, wherein the at least one metamaterial unit cell comprises a split-ring resonator including at least two rings comprised of metal that are bonded to a conductive substrate.

8. The radio frequency sensing apparatus of claim 7, wherein the processor is further configured to produce an electrical model to identify the at least one type of anomaly occurring in the rotating shaft, the electrical model being based on total inductance between the at least two rings and total distributed capacitance between the at least two rings,
optionally:
wherein a first ring of the at least two rings includes a first gap formed therein, and
wherein a second ring of the at least two rings is arranged outside of the first ring so as to encompass the first ring, the second ring including a second gap formed therein.

9. The radio frequency sensing apparatus of any preceding claim,
wherein at least one metamaterial unit cell is arranged on the rotating shaft, the at least one metamaterial unit cell being configured to deform in response to the anomaly being present in the rotating shaft,
wherein the monostatic radar sensor is configured to monitor the at least one signal being reflected off of the at least one metamaterial unit cell in response to the at least one signal being directed at the at least one metamaterial unit cell by at least one signal source.

10. A method of detecting an anomaly in a rotating machine, comprising:
providing at least one radio frequency sensor (110);
providing a rotating machine including a rotating shaft (150);
receiving at least one signal from the rotating machine, the at least one signal being indicative of at least one of resonance shift, magnetic permeability, or return loss magnitude
comparing, via a processor (146), the at least one of resonance shift, magnetic permeability, or return loss magnitude of the at least one signal to a corresponding reference resonance shift, reference magnetic permeability, or reference return loss magnitude for the rotating machine;
determining, via the processor, whether the anomaly has occurred in the rotating shaft based on the comparison of the at least one of resonance shift, magnetic permeability, or return loss magnitude of the at least one signal to the corresponding reference resonance shift, reference magnetic permeability, or reference return loss magnitude for the rotating machine; and
identifying, via the processor, at least one type of anomaly of a plurality of types of anomalies including the anomaly that has occurred in the rotating shaft based on the comparison of the at least one of resonance shift, magnetic permeability, or return loss magnitude of the at least one signal to the corresponding reference resonance shift, reference magnetic permeability, or reference return loss magnitude for the rotating machine,
the method being **characterized in that** an absorbing metamaterial textured coating (154) is applied to the rotating shaft, and
wherein the at least one radio frequency sensor comprises a monostatic radar sensor (140) configured to monitor the at least one signal being reflected off of the absorbing metamaterial textured coating in response to the at least one signal being directed at the absorbing metamaterial textured coating by at least one signal source.

11. The method of claim 10, further comprising:
providing at least one metamaterial unit cell (12) configured to be arranged on the rotating shaft and configured to deform in response to the at least one type of anomaly being present in the rotating machine,
wherein the at least one signal is transmitted from at least one signal source and reflected off of and transmitted through the at least one metamaterial unit cell such that the at least one radio frequency sensor receives the at least one signal,
optionally,
wherein the plurality of types of anomalies includes tension of the rotating shaft, vibration of the rotating shaft, bending of the rotating shaft, torsion of the rotating shaft, and strain of the rotating shaft, and
wherein each of the comparisons of the resonance shift to the reference resonance shift, the magnetic permeability to the reference magnetic permeability, and the return loss magnitude to the reference return loss magnitude correlates to at least one of the plurality of types of anomalies having occurred in the rotating shaft.

12. The method of claim 10 or 11, further comprising:
inputting, via the processor, at least one of the comparison of the resonance shift to the reference resonance shift, the comparison of the magnetic permeability to the reference magnetic permeability, or the comparison of the return loss magnitude to the reference return loss magnitude into a machine learning algorithm; and
utilizing, via the machine learning algorithm, the comparisons to learn and predict at least one association of at least one of the resonance shift, the magnetic permeability, or the return loss magnitude with at least one type of anomaly of the plurality of anomalies.

13. The method of any one of claims 10-12, further comprising:
training a neural network classifier by utilizing at least one of the comparison of the resonance shift to the reference resonance shift, the comparison of the magnetic permeability to the reference magnetic permeability, or the comparison of the return loss magnitude to the reference return loss magnitude.

14. The method of claim 11, further comprising:
producing, via the processor, a mechanical deformation model to identify the at least one type of anomaly occurring in the rotating shaft, the mechanical deformation model being based on: (i) surface deformation of the rotating shaft caused by at least one of tension of the rotating shaft, vibration of the rotating shaft, bending of the rotating shaft, torsion of the rotating shaft, or strain of the rotating shaft; (ii) geometrical deformation of the at least one metamaterial unit cell; and (iii) a comparison of the surface deformation of the rotating shaft and the geometrical deformation of the at least one metamaterial unit cell.

15. The method of claim 10, further comprising:
providing an adhesive polymer thin strip on the rotating shaft, the adhesive polymer thin strip being comprised of inductive polymer resonance metamaterial configured to absorb electromagnetic, EM, wave energy.

## Patentansprüche

1. Funkfrequenz-Abtastvorrichtung (110) zum Detektieren einer Anomalie in einer rotierenden Maschine, umfassend:
eine rotierende Maschine, die eine rotierende Welle (150) aufweist,
mindestens einen Funkfrequenzsensor, der derart ausgelegt ist, dass er mindestens ein von der rotierenden Maschine empfangenes Signal überwacht, wobei das mindestens eine Signal mindestens eines von einer Resonanzverschiebung, einer magnetischen Permeabilität, oder einer Rückflussdämpfungsgröße anzeigt, und
einen Prozessor (146), der derart ausgelegt ist, dass er das mindestens eine von der Resonanzverschiebung, der magnetischen Permeabilität, oder der Rückflussdämpfungsgröße des mindestens einen Signals mit einer entsprechenden Referenzresonanzverschiebung, Referenzmagnetpermeabilität, oder Referenzrückflussdämpfungsgröße für die rotierende Maschine vergleicht, wobei der Prozessor ferner derart ausgelegt ist, dass er auf der Grundlage des Vergleichs ermittelt, ob die Anomalie in der rotierenden Welle aufgetreten ist, und auf der Grundlage des Vergleichs mindestens eine Anomalieart von einer Mehrzahl von Anomaliearten, die die Anomalie, die in der rotierenden Welle aufgetreten ist, umfassen, identifiziert,
**dadurch gekennzeichnet, dass** eine strukturierte Beschichtung aus absorbierendem Metamaterial (154) auf die rotierende Welle aufgebracht ist, und
wobei der mindestens eine Funkfrequenzsensor einen monostatischen Radarsensor (140) umfasst, der derart ausgelegt ist, dass er das mindestens eine Signal überwacht, das von der strukturierten Beschichtung aus absorbierendem Metamaterial reflektiert wird, als Antwort darauf, dass das mindestens eine Signal durch mindestens eine Signalquelle auf die strukturierte Beschichtung aus absorbierendem Metamaterial gerichtet wird.

2. Funkfrequenz-Abtastvorrichtung nach Anspruch 1, ferner umfassend:
mindestens eine Metamaterial-Einheitszelle (12), die derart ausgelegt ist, dass sie auf der rotierenden Welle angeordnet ist, und derart ausgelegt ist, dass sie sich als Antwort darauf, dass die mindestens eine Anomalieart in der rotierenden Maschine vorhanden ist, verformt,
wobei das mindestens eine Signal von mindestens einer Signalquelle ausgesendet, und von der mindestens einen Metamaterial-Einheitszelle reflektiert und durch diese hindurch transmittiert wird, so dass der mindestens eine Funkfrequenzsensor das mindestens eine Signal empfängt.

3. Funkfrequenz-Abtastvorrichtung nach Anspruch 2, wobei die mindestens eine Metamaterial-Einheitszelle derart ausgelegt ist, dass sie an einer Außenfläche der rotierenden Welle angehaftet ist.

4. Funkfrequenz-Abtastvorrichtung nach einem vorhergehenden Anspruch,
wobei die Mehrzahl von Anomaliearten eines oder mehrere von den Folgenden umfasst: Spannung der rotierenden Welle, Vibration der rotierenden Welle, Biegung der rotierenden Welle, Torsion der rotierenden Welle, oder Dehnung der rotierenden Welle, und
wobei jeder der Vergleiche der Resonanzverschiebung mit der Referenzresonanzverschiebung, der magnetischen Permeabilität mit der Referenzmagnetpermeabilität, oder der Rückflussdämpfungsgröße mit der Referenzrückflussdämpfungsgröße mit mindestens einer aus der Mehrzahl von Anomaliearten, die in der rotierenden Welle aufgetreten ist, korreliert.

5. Funkfrequenz-Abtastvorrichtung nach einem vorhergehenden Anspruch, wobei der Prozessor zum mindestens einen von den Folgenden ausgelegt ist: (i) Eingeben des Vergleichs des mindestens einen von der Resonanzverschiebung, der magnetischen Permeabilität, oder der Rückflussdämpfungsgröße mit der entsprechenden Referenzresonanzverschiebung, Referenzmagnetpermeabilität, oder Referenzrückflussdämpfungsgröße für die rotierende Maschine in einen Algorithmus des maschinellen Lernens, wobei der Algorithmus des maschinellen Lernens derart ausgelegt ist, dass er den Vergleich nutzt, um mindestens eine Assoziation von mindestens einem von der Resonanzverschiebung, der magnetischen Permeabilität, oder der Rückflussdämpfungsgröße mit mindestens einer Anomalieart aus der Mehrzahl von Anomalien zu lernen und vorherzusagen, oder (ii) Nutzen des Vergleichs des mindestens einen von der Resonanzverschiebung, der magnetischen Permeabilität, oder der Rückflussdämpfungsgröße mit der entsprechenden Referenzresonanzverschiebung, Referenzmagnetpermeabilität, oder Referenzrückflussdämpfungsgröße für die rotierende Maschine, um einen neuronalen Netzwerk-Klassifikator zu trainieren.

6. Funkfrequenz-Abtastvorrichtung nach Anspruch 2, wobei der Prozessor ferner derart ausgelegt ist, dass er ein mechanisches Verformungsmodell erzeugt, um die mindestens eine Anomalieart, die in der rotierenden Welle auftritt, zu identifizieren, wobei das mechanische Verformungsmodell auf Folgendem basiert: (i) einer Oberflächenverformung der rotierenden Welle, die durch mindestens eines von den Folgenden verursacht wird: Spannung der rotierenden Welle, Vibration der rotierenden Welle, Biegung der rotierenden Welle, Torsion der rotierenden Welle, oder Dehnung der rotierenden Welle, (ii) einer geometrischen Verformung der mindestens einen Metamaterial-Einheitszelle, und (iii) einem Vergleich der Oberflächenverformung der rotierenden Welle mit der geometrischen Verformung der mindestens einen Metamaterial-Einheitszelle.

7. Funkfrequenz-Abtastvorrichtung nach Anspruch 2, wobei die mindestens eine Metamaterial-Einheitszelle einen Spaltringresonator umfasst, der mindestens zwei Ringe, die Metall umfassen, aufweist, die an ein leitfähiges Substrat gebondet sind.

8. Funkfrequenz-Abtastvorrichtung nach Anspruch 7, wobei der Prozessor ferner derart ausgelegt ist, dass er ein elektrisches Modell erzeugt, um die mindestens eine Anomalieart, die in der rotierenden Welle auftritt, zu identifizieren, wobei das elektrische Modell auf einer Gesamtinduktivität zwischen den mindestens zwei Ringen und einer gesamten verteilten Kapazität zwischen den mindestens zwei Ringen basiert,
optional:
wobei ein erster Ring der mindestens zwei Ringe einen darin ausgebildeten ersten Spalt aufweist, und
wobei ein zweiter Ring der mindestens zwei Ringe außerhalb des ersten Rings derart angeordnet ist, dass er den ersten Ring umgibt, wobei der zweite Ring einen darin ausgebildeten zweiten Spalt aufweist.

9. Funkfrequenz-Abtastvorrichtung nach einem vorhergehenden Anspruch,
wobei
mindestens eine Metamaterial-Einheitszelle auf der rotierenden Welle angeordnet ist, wobei die mindestens eine Metamaterial-Einheitszelle derart ausgelegt ist, dass sie sich als Antwort darauf, dass die Anomalie in der rotierenden Welle vorhanden ist, verformt,
wobei der monostatische Radarsensor derart ausgelegt ist, dass er das mindestens eine Signal überwacht, das von der mindestens einen Metamaterial-Einheitszelle reflektiert wird, als Antwort darauf, dass das mindestens eine Signal durch mindestens eine Signalquelle auf die mindestens eine Metamaterial-Einheitszelle gerichtet wird.

10. Verfahren zum Detektieren einer Anomalie in einer rotierenden Maschine, umfassend:
Bereitstellen mindestens eines Funkfrequenzsensors (110),
Bereitstellen einer rotierenden Maschine, die eine rotierende Welle (150) aufweist,
Empfangen mindestens eines Signals von der rotierenden Maschine, wobei das mindestens eine Signal mindestens eines von einer Resonanzverschiebung, einer magnetischen Permeabilität, oder einer Rückflussdämpfungsgröße anzeigt,
Vergleichen, über einen Prozessor (146), des mindestens einen von der Resonanzverschiebung, der magnetischen Permeabilität, oder der Rückflussdämpfungsgröße des mindestens einen Signals mit einer entsprechenden Referenzresonanzverschiebung, Referenzmagnetpermeabilität, oder Referenzrückflussdämpfungsgröße für die rotierende Maschine,
Ermitteln, über den Prozessor, ob die Anomalie in der rotierenden Welle aufgetreten ist, auf der Grundlage des Vergleichs des mindestens einen von der Resonanzverschiebung, der magnetischen Permeabilität, oder der Rückflussdämpfungsgröße des mindestens einen Signals mit der entsprechenden Referenzresonanzverschiebung, Referenzmagnetpermeabilität, oder Referenzrückflussdämpfungsgröße für die rotierende Maschine, und
Identifizieren, über den Prozessor, mindestens einer Anomalieart aus einer Mehrzahl von Anomaliearten, die die Anomalie umfassen, die in der rotierenden Welle aufgetreten ist, auf der Grundlage des Vergleichs des mindestens einen von der Resonanzverschiebung, der magnetischen Permeabilität, oder der Rückflussdämpfungsgröße des mindestens einen Signals mit der entsprechenden Referenzresonanzverschiebung, Referenzmagnetpermeabilität, oder Referenzrückflussdämpfungsgröße für die rotierende Maschine,
wobei das Verfahren **dadurch gekennzeichnet ist, dass**
eine strukturierte Beschichtung aus absorbierendem Metamaterial (154) auf die rotierende Welle aufgebracht wird, und
wobei der mindestens eine Funkfrequenzsensor einen monostatischen Radarsensor (140) umfasst, der derart ausgelegt ist, dass er das mindestens eine Signal überwacht, das von der strukturierten Beschichtung aus absorbierendem Metamaterial reflektiert wird, als Antwort darauf, dass das mindestens eine Signal durch mindestens eine Signalquelle auf die strukturierte Beschichtung aus absorbierendem Metamaterial gerichtet wird.

11. Verfahren nach Anspruch 10, ferner umfassend:
Bereitstellen mindestens einer Metamaterial-Einheitszelle (12), die derart ausgelegt ist, dass sie auf der rotierenden Welle angeordnet wird, und derart ausgelegt ist, dass sie sich als Antwort darauf, dass die mindestens eine Anomalieart in der rotierenden Maschine vorhanden ist, verformt,
wobei das mindestens eine Signal von mindestens einer Signalquelle ausgesendet, und von der mindestens einen Metamaterial-Einheitszelle reflektiert und durch sie hindurch transmittiert wird, so dass der mindestens eine Funkfrequenzsensor das mindestens eine Signal empfängt,
optional,
wobei die Mehrzahl von Anomaliearten umfasst: Spannung der rotierenden Welle, Vibration der rotierenden Welle, Biegung der rotierenden Welle, Torsion der rotierenden Welle, und Dehnung der rotierenden Welle, und
wobei jeder der Vergleiche der Resonanzverschiebung mit der Referenzresonanzverschiebung, der magnetischen Permeabilität mit der Referenzmagnetpermeabilität, und der Rückflussdämpfungsgröße mit der Referenzrückflussdämpfungsgröße mit mindestens einer aus der Mehrzahl von Anomaliearten, die in der rotierenden Welle aufgetretenen ist, korreliert.

12. Verfahren nach Anspruch 10 oder 11, ferner umfassend:
Eingeben, über den Prozessor, mindestens eines von dem Vergleich der Resonanzverschiebung mit der Referenzresonanzverschiebung, dem Vergleich der magnetischen Permeabilität mit der Referenzmagnetpermeabilität, oder dem Vergleich der Rückflussdämpfungsgröße mit der Referenzrückflussdämpfungsgröße in einen Algorithmus des maschinellen Lernens, und
Nutzen, über den Algorithmus des maschinellen Lernens, der Vergleiche, um mindestens eine Assoziation von mindestens einem von der Resonanzverschiebung, der magnetischen Permeabilität, oder der Rückflussdämpfungsgröße mit mindestens einer Anomalieart aus der Mehrzahl von Anomalien zu lernen und vorherzusagen.

13. Verfahren nach einem der Ansprüche 10 bis 12, ferner umfassend:
Trainieren eines neuronalen Netzwerk-Klassifikators durch Nutzen von mindestens einem von dem Vergleich der Resonanzverschiebung mit der Referenzresonanzverschiebung, dem Vergleich der magnetischen Permeabilität mit der Referenzmagnetpermeabilität, oder dem Vergleich der Rückflussdämpfungsgröße mit der Referenzrückflussdämpfungsgröße.

14. Verfahren nach Anspruch 11, ferner umfassend:
Erzeugen, über den Prozessor, eines mechanischen Verformungsmodells, um die mindestens eine Anomalieart, die in der rotierenden Welle auftritt, zu identifizieren, wobei das mechanische Verformungsmodell auf Folgendem basiert: (i) einer Oberflächenverformung der rotierenden Welle, die durch mindestens eines von den Folgenden verursacht wird: Spannung der rotierenden Welle, Vibration der rotierenden Welle, Biegung der rotierenden Welle, Torsion der rotierenden Welle, oder Dehnung der rotierenden Welle, (ii) einer geometrischen Verformung der mindestens einen Metamaterial-Einheitszelle, und (iii) einem Vergleich der Oberflächenverformung der rotierenden Welle mit der geometrischen Verformung der mindestens einen Metamaterial-Einheitszelle.

15. Verfahren nach Anspruch 10, ferner umfassend:
Bereitstellen eines dünnen Haftpolymerstreifens auf der rotierenden Welle, wobei der dünne Haftpolymerstreifen ein induktives Polymerresonanz-Metamaterial umfasst, das derart ausgelegt ist, dass es elektromagnetische Wellenenergie (EM-Wellenenergie) absorbiert.

## Revendications

1. Appareil de détection par radiofréquences (110) pour détecter une anomalie dans une machine rotative, comprenant :
une machine rotative incluant un arbre rotatif (150) ;
au moins un capteur radiofréquence configuré pour surveiller au moins un signal reçu depuis la machine rotative, l'au moins un signal indiquant au moins un parmi un décalage de résonance, une perméabilité magnétique ou une grandeur de perte de retour ; et
un processeur (146) configuré pour comparer l'au moins un parmi un décalage de résonance, une perméabilité magnétique ou une grandeur de perte de retour de l'au moins un signal à un décalage de résonance de référence, une perméabilité magnétique de référence ou une grandeur de perte de retour de référence correspondant pour la machine rotative, le processeur étant en outre configuré pour déterminer si l'anomalie est survenue dans l'arbre rotatif sur la base de la comparaison, et identifier au moins un type d'anomalie parmi une pluralité de types d'anomalies incluant l'anomalie qui est survenue dans l'arbre rotatif sur la base de la comparaison,
**caractérisé en ce qu'**un revêtement texturé de métamatériau absorbant (154) est appliqué à l'arbre rotatif, et
dans lequel l'au moins un capteur radiofréquence comprend un capteur radar monostatique (140) configuré pour surveiller l'au moins un signal qui est réfléchi par le revêtement texturé de métamatériau absorbant en réponse au fait que l'au moins un signal est dirigé vers le revêtement texturé de métamatériau absorbant par au moins une source de signal.

2. Appareil de détection par radiofréquences selon la revendication 1, comprenant en outre :
au moins une cellule d'unité de métamatériau (12) configurée pour être agencée sur l'arbre rotatif et configurée pour se déformer en réponse à la présence de l'au moins un type d'anomalie dans la machine rotative,
dans lequel l'au moins un signal est transmis depuis au moins une source de signal et réfléchi et transmis par l'au moins une cellule d'unité de métamatériau de sorte que l'au moins un capteur radiofréquence reçoive l'au moins un signal.

3. Appareil de détection par radiofréquences selon la revendication 2, dans lequel l'au moins une cellule d'unité de métamatériau est configurée pour adhérer à une surface extérieure de l'arbre rotatif.

4. Appareil de détection par radiofréquences selon l'une quelconque des revendications précédentes,
dans lequel la pluralité de types d'anomalies comprend une ou plusieurs parmi : une tension de l'arbre rotatif, une vibration de l'arbre rotatif, une flexion de l'arbre rotatif, une torsion de l'arbre rotatif ou une contrainte de l'arbre rotatif, et
dans lequel chacune des comparaisons du décalage de résonance au décalage de résonance de référence, de la perméabilité magnétique à la perméabilité magnétique de référence, ou de la grandeur de perte de retour à la grandeur de perte de retour de référence est en corrélation avec au moins un parmi la pluralité de types d'anomalies qui est survenu dans l'arbre rotatif.

5. Appareil de détection par radiofréquences selon l'une quelconque des revendications précédentes, dans lequel le processeur est configuré pour au moins un parmi (i) entrer la comparaison de l'au moins un parmi un décalage de résonance, une perméabilité magnétique ou une grandeur de perte de retour au décalage de résonance de référence, à la perméabilité magnétique de référence ou à la grandeur de perte de retour de référence correspondant pour la machine rotative dans un algorithme d'apprentissage automatique, dans lequel l'algorithme d'apprentissage automatique est configuré pour utiliser la comparaison pour apprendre et prédire au moins une association d'au moins un du décalage de résonance, de la perméabilité magnétique ou de la grandeur de perte de retour avec au moins un type d'anomalie de la pluralité d'anomalies, ou (ii) utiliser la comparaison de l'au moins un parmi un décalage de résonance, une perméabilité magnétique ou une grandeur de perte de retour au décalage de résonance de référence, à la perméabilité magnétique de référence ou à la grandeur de perte de retour de référence correspondant pour la machine rotative pour entraîner un classificateur de réseau neuronal.

6. Appareil de détection par radiofréquences selon la revendication 2, dans lequel le processeur est en outre configuré pour produire un modèle de déformation mécanique pour identifier l'au moins un type d'anomalie survenant dans l'arbre rotatif, le modèle de déformation mécanique étant basé sur (i) une déformation de surface de l'arbre rotatif provoquée par au moins une parmi une tension de l'arbre rotatif, une vibration de l'arbre rotatif, une flexion de l'arbre rotatif, une torsion de l'arbre rotatif ou une contrainte de l'arbre rotatif, (ii) une déformation géométrique de l'au moins une cellule d'unité de métamatériau, et (iii) une comparaison de la déformation de surface de l'arbre rotatif et de la déformation géométrique de l'au moins une cellule d'unité de métamatériau.

7. Appareil de détection par radiofréquences selon la revendication 2, dans lequel l'au moins une cellule d'unité de métamatériau comprend un résonateur à anneau fendu incluant au moins deux anneaux composés de métal qui sont liés à un substrat conducteur.

8. Appareil de détection par radiofréquences selon la revendication 7, dans lequel le processeur est en outre configuré pour produire un modèle électrique pour identifier l'au moins un type d'anomalie survenant dans l'arbre rotatif, le modèle électrique étant basé sur une inductance totale entre les au moins deux anneaux et une capacité distribuée totale entre les au moins deux anneaux,
facultativement :
dans lequel un premier anneau parmi les au moins deux anneaux inclut un premier espace formé dans celui-ci, et
dans lequel un deuxième anneau parmi les au moins deux anneaux est agencé à l'extérieur du premier anneau de manière à englober le premier anneau, le deuxième anneau incluant un deuxième espace formé dans celui-ci.

9. Appareil de détection par radiofréquences selon l'une quelconque des revendications précédentes,
dans lequel au moins une cellule d'unité de métamatériau est agencée sur l'arbre rotatif, l'au moins une cellule d'unité de métamatériau étant configurée pour se déformer en réponse à la présence de l'anomalie dans l'arbre rotatif,
dans lequel le capteur radar monostatique est configuré pour surveiller l'au moins un signal réfléchi par l'au moins une cellule d'unité de métamatériau en réponse au fait que l'au moins signal est dirigé vers l'au moins une cellule d'unité de métamatériau par l'au moins une source de signal.

10. Procédé de détection d'une anomalie dans une machine rotative, comprenant :
la fourniture d'au moins un capteur radiofréquence (110) ;
la fourniture d'une machine rotative incluant un arbre rotatif (150) ;
la réception d'au moins un signal reçu depuis la machine rotative, l'au moins un signal indiquant au moins un parmi un décalage de résonance, une perméabilité magnétique ou une grandeur de perte de retour ;
la comparaison, via un processeur (146), de l'au moins un parmi un décalage de résonance, une perméabilité magnétique ou une grandeur de perte de retour de l'au moins un signal à un décalage de résonance de référence, une perméabilité magnétique de référence ou une grandeur de perte de retour de référence correspondant pour la machine rotative ;
la détermination, via le processeur, si l'anomalie est survenue dans l'arbre rotatif sur la base de la comparaison de l'au moins un parmi un décalage de résonance, une perméabilité magnétique ou une grandeur de perte de retour de l'au moins un signal au décalage de résonance de référence, à la perméabilité magnétique de référence ou à la grandeur de perte de retour de référence correspondant pour la machine rotative ; et
l'identification, via le processeur, d'au moins un type d'anomalie parmi une pluralité de types d'anomalies incluant l'anomalie qui est survenue dans l'arbre rotatif sur la base de la comparaison de l'au moins un parmi un décalage de résonance, une perméabilité magnétique ou une grandeur de perte de retour de l'au moins un signal au décalage de résonance de référence, à la perméabilité magnétique de référence ou à la grandeur de perte de retour de référence correspondant pour la machine rotative,
le procédé étant **caractérisé en ce qu'**un revêtement texturé de métamatériau absorbant (154) est appliqué à l'arbre rotatif, et
dans lequel l'au moins un capteur radiofréquence comprend un capteur radar monostatique (140) configuré pour surveiller l'au moins un signal qui est réfléchi par le revêtement texturé de métamatériau absorbant en réponse au fait que l'au moins un signal est dirigé vers le revêtement texturé de métamatériau absorbant par au moins une source de signal.

11. Procédé selon la revendication 10, comprenant en outre :
la fourniture d'au moins une cellule d'unité de métamatériau (12) configurée pour être agencée sur l'arbre rotatif et configurée pour se déformer en réponse à la présence de l'au moins un type d'anomalie dans la machine rotative,
dans lequel l'au moins un signal est transmis depuis au moins une source de signal et réfléchi et transmis par l'au moins une cellule d'unité de métamatériau de sorte que l'au moins un capteur radiofréquence reçoive l'au moins un signal,
facultativement,
dans lequel la pluralité de types d'anomalies inclut une tension de l'arbre rotatif, une vibration de l'arbre rotatif, une flexion de l'arbre rotatif, une torsion de l'arbre rotatif et une contrainte de l'arbre rotatif, et
dans lequel chacune des comparaisons du décalage de résonance au décalage de résonance de référence, de la perméabilité magnétique à la perméabilité magnétique de référence, et de la grandeur de perte de retour à la grandeur de perte de retour de référence est en corrélation avec au moins un parmi la pluralité de types d'anomalies qui est survenu dans l'arbre rotatif.

12. Procédé selon la revendication 10 ou 11, comprenant en outre :
l'entrée, via le processeur, d'au moins une parmi la comparaison du décalage de résonance au décalage de résonance de référence, la comparaison de la perméabilité magnétique à la perméabilité magnétique de référence ou la comparaison de la grandeur de perte de retour à la grandeur de perte de retour de référence dans un algorithme d'apprentissage automatique ; et
l'utilisation, via l'algorithme d'apprentissage automatique, des comparaisons pour apprendre et prédire au moins une association d'au moins un parmi le décalage de résonance, la perméabilité magnétique ou la grandeur de perte de retour à au moins un type d'anomalie parmi la pluralité d'anomalies.

13. Procédé selon l'une quelconque des revendications 10 à 12, comprenant en outre :
l'entraînement d'un classificateur de réseau neuronal par l'utilisation d'au moins une parmi la comparaison du décalage de résonance au décalage de résonance de référence, la comparaison de la perméabilité magnétique à la perméabilité magnétique de référence, ou la comparaison de la grandeur de perte de retour à la grandeur de perte de retour de référence.

14. Procédé selon la revendication 11, comprenant en outre :
la production, via le processeur, d'un modèle de déformation mécanique pour identifier l'au moins un type d'anomalie survenant dans l'arbre rotatif, le modèle de déformation mécanique étant basé sur : (i) une déformation de surface de l'arbre rotatif provoquée par au moins une parmi une tension de l'arbre rotatif, une vibration de l'arbre rotatif, une flexion de l'arbre rotatif, une torsion de l'arbre rotatif ou une contrainte de l'arbre rotatif ; (ii) une déformation géométrique de l'au moins une cellule d'unité de métamatériau ; et (iii) une comparaison de la déformation de surface de l'arbre rotatif et de la déformation géométrique de l'au moins une cellule d'unité de métamatériau.

15. Procédé selon la revendication 10, comprenant en outre :
la fourniture d'une bande mince de polymère adhésif sur l'arbre rotatif, la bande mince de polymère adhésif étant composée de métamatériau de résonance de polymère inductif configuré pour absorber une énergie d'onde électromagnétique, EM.
